# EUROPEAN PATENT APPLICATION

(11) **EP 3 819 731 A1**
(43) Date of publication of application: **12.05.2021**
(21) Application number: 18925579.7
(22) Date of filing: 03.10.2018
(51) Int. Cl.: G05B 19/418

(54) **PRODUCTION LINE AND MANUFACTURING METHOD FOR PRODUCTION LINE**

(30) Priority: 04.07.2018 JP 2018127852
(71) Applicant: Kabushiki Kaisha Yaskawa Denki, Kitakyushu-shi, Fukuoka 806-0004 (JP)
(72) Inventor: YAMAGUCHI Kanta, Kitakyushu-shi, Fukuoka 806-0004 (JP); MURAYAMA Takuya, Kitakyushu-shi, Fukuoka 806-0004 (JP); KUROIWA Yasufumi, Kitakyushu-shi, Fukuoka 806-0004 (JP); MURAKAMI Yoshinobu, Kitakyushu-shi, Fukuoka 806-0004 (JP)
(74) Representative: Viering, Jentschura & Partner mbB Patent- und Rechtsanwälte
(86) International application number: PCT/JP2018/037037
(87) International publication number: WO 2020/008659

(57) **Abstract**

High flexibility is achieved. A production line (1) for producing products includes a combination of a plurality of cells (3, 5, 7, 9, 11, 13, 15, 17, 19, 21, 23, 25, 27, 29, 31), the plurality of cells including: work cells (5, 9, 13, 17, 21, 25, 29) each equipped with an automatic work machine configured to perform predetermined work on a component; and connection cells (3, 7, 11, 15, 19, 23, 27, 31) each disposed adjacent to a corresponding one of the work cells (5, 9, 13, 17, 21, 25, 29) and capable of repairing or ejecting the component.

## Description

### Technical Field

The embodiment disclosed herein relates to a production line and a method of manufacturing the production line.

### Background Art

For example, Patent Literature 1 discloses a robot system including a first robot, a first cell that is movable and is provided with the first robot, a second robot, and a second cell that is movable and is provided with the second robot.

### Citation List

### Patent Literature

Patent Literature 1: Japanese Patent Application Laid-Open No. 2016-203348

### Summary of Invention

### Technical Problem

The above-described robot system in the related art is used, for example, in a production line where products are produced. High flexibility is required for such a production line.

The present invention has been made in view of such a problem, and it is therefore an object of the present invention to provide a production line capable of achieving high flexibility and a method of manufacturing the production line.

### Solution to Problem

In order to solve the above-described problem, applied according to one aspect of the present invention is a production line for producing products that includes a combination of a plurality of cells. The plurality of cells include at least one first cell equipped with an automatic work machine configured to perform predetermined work on a component, and at least one second cell disposed adjacent to the first cell and capable of repairing or ejecting the component.

Further, applied according to another aspect of the present invention is a production line for producing products that includes a combination of a plurality of cells. The plurality of cells include at least one first cell equipped with an automatic work machine configured to perform predetermined work on a component, and at least one second cell disposed adjacent to the first cell and capable of repairing or ejecting the component. The first cell includes, as the automatic work machine, at least one dedicated work machine specifically designed to perform the predetermined work, at least one articulated robot having a plurality of joints and configured to move the component between the pallet and the dedicated work machine, or between a plurality of the dedicated work machines, a first transfer device configured to transfer a pallet on which the component is placed in a first direction that is a transfer direction of the component in the production line, and a plurality of work stations serving as stop positions where the pallet transferred by the first transfer device is stopped for a predetermined stop time, the plurality of work stations being each assigned a predetermined work process to be performed by the automatic work machine.

Further, applied according to yet another aspect of the present invention is a method of manufacturing a production line for producing products, the production line including a combination of a plurality of cells, the method including disposing at least one first cell equipped with an automatic work machine configured to perform predetermined work on a component based on a specification of the production line, and disposing, as needed, at least one second cell adjacent to the first cell, the at least one second cell being capable of repairing or ejecting the component.

Further, applied according to yet another aspect of the present invention is a production line for producing products that includes a combination of a plurality of cells in which each of the plurality of cells includes a transfer device configured to transfer a pallet on which a component is placed, and at least one of the plurality of cells includes an automatic work machine configured to perform predetermined work on the component.

### Advantageous Effects of Invention

The production line or the like according to the present invention can achieve high flexibility.

### Brief Description of Drawings

FIG. 1 is an explanatory diagram showing an example of an exterior view of a production line.
FIG. 2 is an explanatory diagram showing an example of a pallet flow in the production line and an example of a controller configuration.
FIG. 3 is an explanatory diagram showing an example of an internal structure of a third assembly cell.
FIG. 4 is an explanatory diagram showing an example of a structure of a positioning mechanism of the third assembly cell.
FIG. 5 is an explanatory diagram showing an example of an internal structure of a second component supply cell.
FIG. 6 is an explanatory diagram showing an example of an operation of the second component supply cell.
FIG. 7 is an explanatory diagram showing an example of a method of manufacturing the production line.
FIG. 8 is an explanatory diagram showing another example of the method of manufacturing the production line.
FIG. 9 is an explanatory diagram showing still another example of the method of manufacturing the production line.
FIG. 10 is an explanatory diagram showing an example of an internal structure of a modification where a plurality of identical dedicated work machines are provided in the third assembly cell.
FIG. 11 is an explanatory diagram showing an example of a hardware structure of a controller.

### Description of Embodiment

A description will be given below of one embodiment with reference to the drawings. Note that, in the following description, for convenience of explanation of the structure of the production line and the like, directions such as up, down, left, right, front, and rear may be used as needed, but are not intended to impose limitations on the positional relationships among the components of the production line and the like. According to the present embodiment, a right direction in a left-right direction corresponds to a transfer direction of a workpiece in the production line, an up-down direction corresponds to a vertical direction, and a front-rear direction corresponds to a direction orthogonal to both the left-right direction and the up-down direction.

### <1. Overall structure of production line>

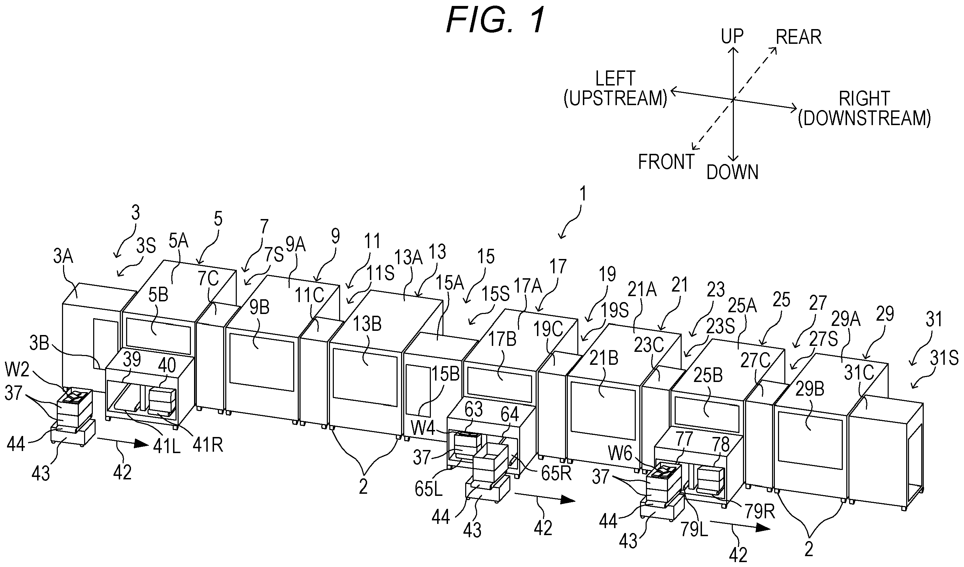

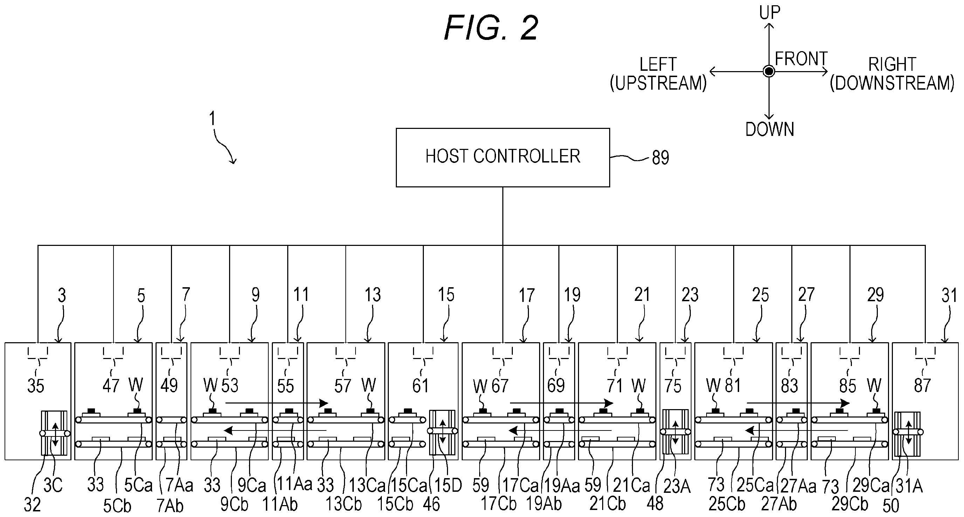

First, a description will be given of an example of an overall structure of the production line according to the present embodiment with reference to FIGS. 1 and 2. FIG. 1 is an explanatory diagram showing an example of an exterior view of the production line, and FIG. 2 is an explanatory diagram showing an example of a pallet flow in the production line and an example of a controller configuration.

A production line 1 is a production line for producing products from a combination of a plurality of components while transferring the components in the transfer direction and includes a combination of a plurality of cells as shown in FIG. 1. Predetermined work is assigned to each cell. Each cell includes a housing that houses a device configured to perform the assigned work and the like, and a plurality of casters 2 provided on a bottom of the housing, which makes the cell movable. An adjuster is provided on each caster 2 or at a position remote from the caster 2, which makes a height such as a level adjustable.

According to the present embodiment, a description will be given of, for example, a case where a motor control device is produced as an example of the product. The production line 1 includes the plurality of cells of a connection cell 3, a first component supply cell 5, a connection cell 7, a first assembly cell 9, a connection cell 11, a second assembly cell 13, a connection cell 15, a second component supply cell 17, a connection cell 19, a third assembly cell 21, a connection cell 23, a third component supply cell 25, a connection cell 27, a fourth assembly cell 29, and a connection cell 31 arranged in this order from an upstream side (left side) toward a downstream side (right side) in the transfer direction of the component.

The connection cell 3 (an example of a second cell) is disposed adjacent to the upstream side of the first component supply cell 5 and is disposed on the most upstream side of the production line 1. The connection cell 3 is a cell configured to connect a preceding process in the production line 1 and the production line 1, in other words, a cell serving as an entrance of the production line 1. The connection cell 3 has an opening 3B provided on a front side of a housing 3A, which allows maintenance work and the like to be performed from the front. Further, the connection cell 3 has an access space 3S (an example of an access part) provided behind the housing 3A, which allows a worker to make access to a first pallet 33 to perform at least either repairs or ejection on the component. As shown in FIG. 2, a transfer conveyor 3C (an example of a third transfer device) and a lift mechanism 32 are provided inside the connection cell 3, and the transfer conveyor 3C moves up and down. The lift mechanism 32 (an example of a moving mechanism) moves the transfer conveyor 3C between a position corresponding to a first transfer conveyor 5Ca of the first component supply cell 5 and a position corresponding to a second transfer conveyor 5Cb of the first component supply cell 5 to be described later. In the connection cell 3, the first pallet 33 that is empty and is returned from the downstream side is moved upward by the transfer conveyor 3C. The first pallet 33 is a member that includes protrusions and recesses or a positioning member (not shown) configured to position each component and on which components W1, W2, etc. to be described later are placed at their respective predetermined portions. The component W1 (simply denoted by "W" in FIG. 2) carried from the preceding process is placed on the first pallet 33 by the worker, and the first pallet 33 is transferred to the first component supply cell 5 that is the next cell by the transfer conveyor 3C. The component W1 is, for example, a control substrate or the like. Note that when the component W1 is placed on the first pallet 33, the worker can inspect the component W1 and repair or eject the component W1 if the component W1 has any defect, for example. The connection cell 3 is equipped with a controller 35 that controls all devices in the connection cell 3, and a servomotor (not shown) that drives the transfer conveyor 3C is controlled by the controller 35.

Note that an automatic work machine may be installed in the connection cell 3, and the component W1 may be moved to the first pallet 33 by the automatic work machine. Herein, the "automatic work machine" includes a dedicated work machine designed exclusively for specific work, the dedicated work machine being equipped with a vertically articulated robot or a horizontally articulated robot, or an actuator movable in at least one of XYZθ directions. Further, as described above, the access space 3S is provided outside of (behind) the housing 3A. Alternatively, the access space 3S may be provided inside the housing 3A, and the housing 3A may have a door or the like provided to allow the worker to enter and exit from the housing 3A.

The first component supply cell 5 (an example of the first cell and the third cell) is a cell disposed adjacent to the downstream side of the connection cell 3 and configured to supply the component W2 (an example of the predetermined work). The first component supply cell 5 has a window 5B provided on a front side of a housing 5A, which makes an inside of the first component supply cell 5 visible from the front. As shown in FIG. 2, a transfer conveyor 5C (an example of the transfer device) made up of two upper and lower stages is installed inside the first component supply cell 5, the first transfer conveyor 5Ca (an example of the first transfer device) serving as the upper stage transfers the first pallet 33 on which the components W1, W2, etc. (simply denoted by "W" in FIG. 2) are placed to the downstream side (to the right, which is the transfer direction, an example of the first direction), and the second transfer conveyor 5Cb (an example of the second transfer device) serving as the lower stage transfers the first pallet 33 that is empty to the upstream side (to the left, which is the opposite direction of the transfer direction, an example of the second direction).

As shown in FIG. 1, the first component supply cell 5 has a reception opening 39 through which a component container 37 containing the component W2 is received from an automatic guided vehicle 43, and an ejection opening 40 through which the component container 37 that is empty is ejected to the automatic guided vehicle 43 provided on the front side of the first component supply cell 5. According to the present embodiment, the component container 37 is transferred, with being stacked in two stages, for example, by the automatic guided vehicle 43 and is supplied to and ejected from the first component supply cell 5. The reception opening 39 is disposed adjacent to the upstream side of the ejection opening 40 in a travel direction of the automatic guided vehicle 43. In the example shown in FIG. 1, the automatic guided vehicle 43 moves to the right in the left-right direction (indicated by an arrow 42 in FIG. 1), and therefore the reception opening 39 is disposed adjacent to the left side of the ejection opening 40. The automatic guided vehicle 43 is equipped with a conveyor 44 capable of transferring the component container 37 in a direction orthogonal to the travel direction 42 (in this example, the front-rear direction). A loading conveyor 41L is provided at the reception opening 39 and is configured to receive the component container 37 transferred by the conveyor 44 of the automatic guided vehicle 43 and to transfer the component container 37 into the cell. An automatic work machine (not shown) is installed inside the first component supply cell 5 and is configured to move the component W2 contained in the component container 37 to the first pallet 33. The component W2 is, for example, a heat sink, a substrate cover, or the like. The first pallet 33 on which the components W1, W2, etc. are placed is transferred to the connection cell 7 that is the next cell by the first transfer conveyor 5Ca. An unloading conveyor 41R is provided at the ejection opening 40 and is configured to eject the component container 37 that is empty to the conveyor 44 of the automatic guided vehicle 43. As described above, the automatic guided vehicle 43 moves to the reception opening 39 of the first component supply cell 5 to supply the component container 37 containing the component W2 to the reception opening 39, next moves to the ejection opening 40 to receive the component container 37 that is empty from the ejection opening 40, and then moves to a predetermined position.

As shown in FIG. 2, the first component supply cell 5 is equipped with a controller 47 that controls all devices in the first component supply cell 5, and a servomotor (not shown) that drives the transfer conveyors 5Ca, 5Cb, the automatic work machine, etc. are controlled by the controller 47. Further, in the first component supply cell 5, a camera, a sensor, etc. (not shown) configured to detect whether supply work has been properly performed are installed, and the controller 47 determines whether the supply work has failed based on the above-described detection result and causes, when determining that the supply work has failed, a notification means (a touch screen, an alarm, or the like) (not shown) to make notification.

Note that the component container 37 may be transferred by, for example, the worker using a trolley. Further, the component container 37 may be transferred in a single stack, or may be transferred with being stacked in three or more stages.

The connection cell 7 (an example of the second cell) is a cell disposed adjacent to the downstream side of the first component supply cell 5 and configured to connect the first component supply cell 5 and the first assembly cell 9. The connection cell 7 has an access space 7S (an example of the access part) provided behind a housing 7C located between the first component supply cell 5 and the first assembly cell 9, which allows the worker to make access to the first pallet 33 to perform at least either repairs or ejection on the component. As shown in FIG. 2, a transfer conveyor 7A (an example of the transfer device) made up of two upper and lower stages is installed inside the connection cell 7, a first transfer conveyor 7Aa serving as the upper stage transfers the first pallet 33 on which the components W1, W2, etc. are placed to the downstream side, and a second transfer conveyor 7Ab serving as the lower stage transfers the first pallet 33 that is empty to the upstream side. In the connection cell 7, when the notification means of the first component supply cell 5 makes notification that the supply work has failed, the worker repositions the component W2 on the first pallet 33 and performs repairs (including repairs on the component W2), or ejects, when the repairs are not possible, the first pallet 33 or the component W2 that is defective from the production line. Note that, even when no notification is made, the worker may check whether the component W2 has been properly supplied to the first pallet 33 in the first component supply cell 5 located on the upstream side and may perform, when the supply has failed, repairs or ejection. The first pallet 33 on which the components W1, W2, etc. are placed is transferred to the first assembly cell 9 that is the next cell by the first transfer conveyor 7Aa. As shown in FIG. 2, the connection cell 7 is equipped with a controller 49 that controls all devices in the connection cell 7, and a servomotor (not shown) that drives the transfer conveyors 7Aa, 7Ab is controlled by the controller 49.

Note that, in the connection cell 7, in addition to the above-described repair work and ejection work on the component, the worker may manually perform maintenance work, work that is difficult with an automatic work machine (such as wiring routing or complicated assembly work), and the like. Alternatively, an automatic work machine may be installed in the connection cell 7 to perform the above-described work and the like. Further, in the above, the access space 7S is provided outside of (behind) the housing 7C. Alternatively, the access space 7S may be provided inside the housing 7C, and the housing 7C may have a door or the like provided to allow the worker to enter and exit from the housing 7C.

The first assembly cell 9 (an example of the first cell) is a cell disposed adjacent to the downstream side of the connection cell 7 and configured to perform assembly work on the components W1, W2 (an example of the predetermined work). The first assembly cell 9 has a window 9B provided on a front side of a housing 9A, which makes an inside of the first assembly cell 9 visible from the front. As shown in FIG. 2, a transfer conveyor 9C (an example of the transfer device) made up of two upper and lower stages is installed inside the first assembly cell 9, a first transfer conveyor 9Ca (an example the first transfer device) serving as the upper stage transfers the first pallet 33 on which the components W1, W2, etc. assembled (simply denoted by "W" in FIG. 2) are placed to the downstream side, and a second transfer conveyor 9Cb (an example the second transfer device) serving as the lower stage transfers the first pallet 33 that is empty to the upstream side. A robot (not shown) and dedicated work machines (not shown) that each perform a corresponding one of various types of work are installed inside the first assembly cell 9, and the robot moves the components W1, W2 between the first pallet 33 and each dedicated work machine. Examples of the work performed by each dedicated work machine in the first assembly cell 9 include applying a compound, mounting a control substrate onto a heat sink, screwing a control substrate, and the like. The first pallet 33 on which the components W1, W2, etc. assembled are placed is transferred to the connection cell 11 that is the next cell by the first transfer conveyor 9Ca.

As shown in FIG. 2, the first assembly cell 9 is equipped with a controller 53 that controls all devices in the first assembly cell 9, and a servomotor (not shown) that drives the transfer conveyors 9Ca, 9Cb, the robot, the automatic work machines, etc. are controlled by the controller 53. Further, in the first assembly cell 9, a camera, a sensor, etc. (not shown) configured to detect whether assembly work has been properly performed are installed, and the controller 53 determines whether the assembly work has failed based on the above-described detection result and causes, when determining that the assembly work has failed, a notification means (a touch screen, an alarm, or the like) (not shown) to make notification.

The connection cell 11 (an example of the second cell) is a cell disposed adjacent to the downstream side of the first assembly cell 9 and configured to connect the first assembly cell 9 and the second assembly cell 13. The connection cell 11 has an access space 11S (an example of the access part) provided behind a housing 11C located between the first assembly cell 9 and the second assembly cell 13, which allows the worker to make access to the first pallet 33 to perform at least either repairs or ejection on the component. As shown in FIG. 2, a transfer conveyor 11A (an example of the transfer device) made up of two upper and lower stages is installed inside the connection cell 11, a first transfer conveyor 11Aa serving as the upper stage transfers the first pallet 33 on which the components W1, W2, etc. assembled are placed to the downstream side, and a second transfer conveyor 11Ab serving as the lower stage transfers the first pallet 33 that is empty to the upstream side. In the connection cell 11, when the notification means of the first assembly cell 9 makes notification that the assembly work has failed, the worker performs repairs or ejects, when the repairs are not possible, the defective component from the production line. Note that, even when no notification is made, the worker may check whether the assembly work has been properly performed on the components W1, W2 in the first assembly cell 9 located on the upstream side and may perform, when the work has failed, repairs or ejection. The first pallet 33 on which the components W1, W2, etc. assembled are placed is transferred to the second assembly cell 13 that is the next cell by the first transfer conveyor 11Aa. As shown in FIG. 2, the connection cell 11 is equipped with a controller 55 that controls all devices in the connection cell 11, and a servomotor (not shown) that drives the transfer conveyors 11Aa, 11Ab is controlled by the controller 55.

Note that, in the connection cell 11, in addition to the above-described repair work and ejection work on the component, the worker may manually perform maintenance work, work that is difficult with an automatic work machine (such as wiring routing or complicated assembly work), and the like. Alternatively, an automatic work machine may be installed in the connection cell 11 to perform the above-described work and the like. Further, in the above, the access space 11S is provided outside of (behind) the housing 11C. Alternatively, the access space 11S may be provided inside the housing 11C, and the housing 11C may have a door or the like provided to allow the worker to enter and exit from the housing 11C.

The second assembly cell 13 (an example of the first cell) is a cell disposed adjacent to the downstream side of the connection cell 11 and configured to further perform assembly work on the components W1, W2 (an example of the predetermined work). The second assembly cell 13 has a window 13B provided on a front side of a housing 13A, which makes an inside of the second assembly cell 13 visible from the front. As shown in FIG. 2, a transfer conveyor 13C (an example of the transfer device) made up of two upper and lower stages is installed inside the second assembly cell 13, a first transfer conveyor 13Ca (an example the first transfer device) serving as the upper stage transfers the first pallet 33 on which the components W1, W2, etc. assembled (simply denoted by "W" in FIG. 2) are placed to the downstream side, and a second transfer conveyor 13Cb (an example the second transfer device) serving as the lower stage transfers the first pallet 33 that is empty to the upstream side. A robot (not shown) and dedicated work machines (not shown) that each perform a corresponding one of various types of work are installed inside the second assembly cell 13, and the robot moves the components W1, W2 between the first pallet 33 and each dedicated work machine. Examples of the work performed by each dedicated work machine in the second assembly cell 13 include screwing a control substrate, printing on a substrate cover, fitting a substrate cover, and the like. The first pallet 33 on which the components W1, W2, etc. assembled are placed is transferred to the connection cell 15 that is the next cell by the transfer conveyor 13C. Note that, in the following description, the components W1, W2 assembled in the second assembly cell 13 are also referred to as "first semi-finished product W3" as needed.

As shown in FIG. 2, the second assembly cell 13 is equipped with a controller 57 that controls all devices in the second assembly cell 13, and a servomotor (not shown) that drives the transfer conveyors 13Ca, 13Cb, the robot, the automatic work machines, etc. are controlled by the controller 57. Further, in the second assembly cell 13, a camera, a sensor, etc. (not shown) configured to detect whether assembly work has been properly performed are installed, and the controller 57 determines whether the assembly work has failed based on the above-described detection result and causes, when determining that the assembly work has failed, a notification means (a touch screen, an alarm, or the like) (not shown) to make notification.

The connection cell 15 (an example of the second cell) is a cell disposed adjacent to the downstream side of the second assembly cell 13 and configured to connect the second assembly cell 13 and the second component supply cell 17. The connection cell 15 has an access space 15S (an example of the access part) provided behind a housing 15A located between the second assembly cell 13 and the second component supply cell 17, which allows the worker to make access to the first pallet 33 to perform at least either repairs or ejection on the component. The connection cell 15 has an opening 15B provided on a front side of the housing 15A, which allows maintenance work and the like to be performed from the front. As shown in FIG. 2, a transfer conveyor 15C (an example of the transfer device) made up of two upper and lower stages, a transfer conveyor 15D (an example of the third transfer device), and a lift mechanism 46 are provided inside the connection cell 15, and the transfer conveyor 15D moves up and down. The lift mechanism 46 (an example of the moving mechanism) moves the transfer conveyor 15D between a position corresponding to the first transfer conveyor 13Ca of the second assembly cell 13 and a position corresponding to the second transfer conveyor 13Cb of the second assembly cell 13. In the connection cell 15, the first pallet 33 on which the first semi-finished product W3 is placed is transferred to a predetermined position by a first transfer conveyor 15Ca serving as the upper stage, and the first semi-finished product W3 is taken out from the first pallet 33 by an automatic work machine. The first pallet 33 that is empty is moved downward by the transfer conveyor 15D, and is transferred to the upstream side by a second transfer conveyor 15Cb serving as the lower stage. Accordingly, the first pallet 33 circulates through the connection cell 3, the first component supply cell 5, the connection cell 7, the first assembly cell 9, the connection cell 11, the second assembly cell 13, and the connection cell 15.

On the other hand, in the connection cell 15, a second pallet 59 that is empty and is returned from the downstream side is moved upward by the transfer conveyor 15D. The second pallet 59 is a member that includes protrusions and recesses or a positioning member (not shown) configured to position each component and on which the first semi-finished product W3, a component W4 to be described later, etc. are placed at their respective predetermined portions. The above-described automatic work machine places the first semi-finished product W3 taken out from the first pallet 33 onto the second pallet 59. Accordingly, the first semi-finished product W3 is relocated from the first pallet 33 to the second pallet 59. Further, the transfer conveyor 15D moves the first pallet 33 and the second pallet 59 up and down alternately such that, when moving downward, the transfer conveyor 15D carries the first pallet 33 that is empty, and when moving upward, the transfer conveyor 15D carries the second pallet 59 that is empty.

Further, in the connection cell 15, when the notification means of the second assembly cell 13 makes notification that the assembly work has failed, the worker performs repairs on the first semi-finished product W3, or ejects, when the repairs are not possible, the defective product from the production line. Note that, even when no notification is made, the worker may check whether the assembly work has been properly performed on the first semi-finished product W3 in the second assembly cell 13 located on the upstream side and may perform, when the work has failed, repairs or ejection. The second pallet 59 on which the first semi-finished product W3 assembled is placed is transferred to the second component supply cell 17 that is the next cell by the transfer conveyor 15D. As shown in FIG. 2, the connection cell 15 is equipped with a controller 61 that controls all devices in the connection cell 15, and a servomotor (not shown) that drives the transfer conveyors 15Ca, 15Cb, 15D and the automatic work machine is controlled by the controller 61.

Note that, in the connection cell 15, in addition to the above-described repair work and ejection work on the component, the worker may manually perform maintenance work, work that is difficult with the automatic work machine (such as wiring routing or complicated assembly work), and the like. Alternatively, the above-described work and the like may be performed by the automatic work machine. Further, as described above, the access space 15S is provided outside of (behind) the housing 15A. Alternatively, the access space 15S may be provided inside the housing 15A, and the housing 15A may have a door or the like provided to allow the worker to enter and exit from the housing 15A.

The second component supply cell 17 (an example of the first cell and the third cell) is a cell disposed adjacent to the downstream side of the connection cell 15 and configured to supply the component W4 (an example of the predetermined work). The second component supply cell 17 has a window 17B provided on a front side of a housing 17A, which makes an inside of the second component supply cell 17 visible from the front. As shown in FIG. 2, a transfer conveyor 17C (an example of the transfer device) made up of two upper and lower stages is installed inside the second component supply cell 17, a first transfer conveyor 17Ca (an example the first transfer device) serving as the upper stage transfers the second pallet 59 on which the first semi-finished product W3, the component W4, etc. (simply denoted by "W" in FIG. 2) are placed to the downstream side, and a second transfer conveyor 17Cb (an example the second transfer device) serving as the lower stage transfers the second pallet 59 that is empty to the upstream side.

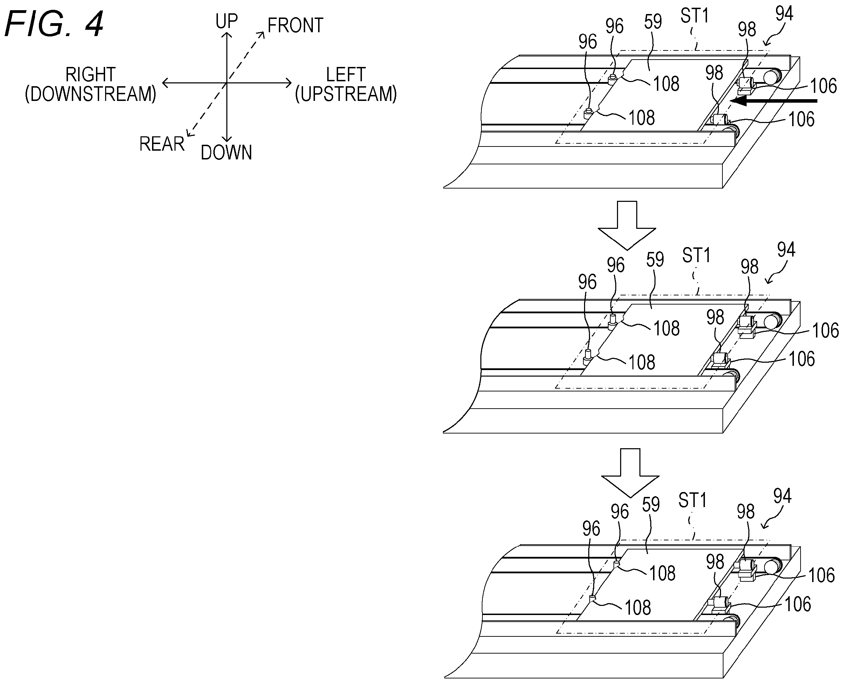

As shown in FIG. 1, the second component supply cell 17 has a reception opening 63 through which the component container 37 containing the component W4 is received from the automatic guided vehicle 43, and an ejection opening 64 through which the component container 37 that is empty is ejected to the automatic guided vehicle 43 provided on the front side of the second component supply cell 17. The reception opening 63 is disposed adjacent to the left side, which is the upstream side, of the ejection opening 64 in the travel direction of the automatic guided vehicle 43 (indicated by the arrow 42 in the FIG. 1). A loading conveyor 65L is provided at the reception opening 63 and is configured to receive the component container 37 transferred by the conveyor 44 of the automatic guided vehicle 43 and to transfer the component container 37 into the cell. An automatic work machine (refer to FIG. 4 to be described later) is installed inside the second component supply cell 17 and is configured to move the component W4 contained in the component container 37 to the second pallet 59. The component W4 is, for example, an interface substrate, an interface cover, or the like. The second pallet 59 on which the first semi-finished product W3, the component W4, etc. are placed is transferred to the connection cell 19 that is the next cell by the first transfer conveyor 17Ca. An unloading conveyor 65R is provided at the ejection opening 64 and is configured to eject the component container 37 that is empty to the conveyor 44 of the automatic guided vehicle 43. As described above, the automatic guided vehicle 43 moves to the reception opening 63 of the second component supply cell 17 to supply the component container 37 containing the component W4 to the reception opening 63, next moves to the ejection opening 64 to receive the component container 37 that is empty from the ejection opening 64, and then moves to a predetermined position.

As shown in FIG. 2, the second component supply cell 17 is equipped with a controller 67 that controls all devices in the second component supply cell 17, and a servomotor (not shown) that drives the transfer conveyors 17Ca, 17Cb, the automatic work machine, etc. are controlled by the controller 67. Further, in the second component supply cell 17, a camera, a sensor, etc. (not shown) configured to detect whether supply work has been properly performed are installed, and the controller 67 determines whether the supply work has failed based on the above-described detection result and causes, when determining that the supply work has failed, a notification means (a touch screen, an alarm, or the like) (not shown) to make notification.

Note that the component container 37 may be transferred by, for example, the worker using a trolley. Further, the component container 37 may be transferred in a single stack, or may be transferred with being stacked in three or more stages.

The connection cell 19 (an example of the second cell) is a cell disposed adjacent to the downstream side of the second component supply cell 17 and configured to connect the second component supply cell 17 and the third assembly cell 21. The connection cell 19 has an access space 19S (an example of the access part) provided behind a housing 19C located between the second component supply cell 17 and the third assembly cell 21, which allows the worker to make access to the second pallet 59 to perform at least either repairs or ejection on the component. As shown in FIG. 2, a transfer conveyor 19A (an example of the transfer device) made up of two upper and lower stages is installed inside the connection cell 19, a first transfer conveyor 19Aa serving as the upper stage transfers the second pallet 59 on which the first semi-finished product W3, the component W4, etc. are placed to the downstream side, and a second transfer conveyor 19Ab serving as the lower stage transfers the second pallet 59 that is empty to the upstream side. In the connection cell 19, when the notification means of the second component supply cell 17 makes notification that the supply work has failed, the worker repositions the component W4 on the second pallet 59 and performs repairs (including repairs on the component W4), or ejects, when the repairs are not possible, the second pallet 59 or the component W4 that is defective from the production line. Note that, even when no notification is made, the worker may check whether the component W4 has been properly supplied to the second pallet 59 in the second component supply cell 17 located on the upstream side and may perform, when the supply has failed, repairs or ejection. The second pallet 59 on which the first semi-finished product W3, the component W4, etc. are placed is transferred to the third assembly cell 21 that is the next cell by the first transfer conveyor 19Aa. As shown in FIG. 2, the connection cell 19 is equipped with a controller 69 that controls all devices in the connection cell 19, and a servomotor (not shown) that drives the transfer conveyors 19Aa, 19Ab is controlled by the controller 69.

Note that, in the connection cell 19, in addition to the above-described repair work and ejection work on the component, the worker may manually perform maintenance work, work that is difficult with an automatic work machine (such as wiring routing or complicated assembly work), and the like. Alternatively, an automatic work machine may be installed in the connection cell 15 to perform the above-described work and the like. Further, in the above, the access space 19S is provided outside of (behind) the housing 19C. Alternatively, the access space 19S may be provided inside the housing 19C, and the housing 19C may have a door or the like provided to allow the worker to enter and exit from the housing 19C.

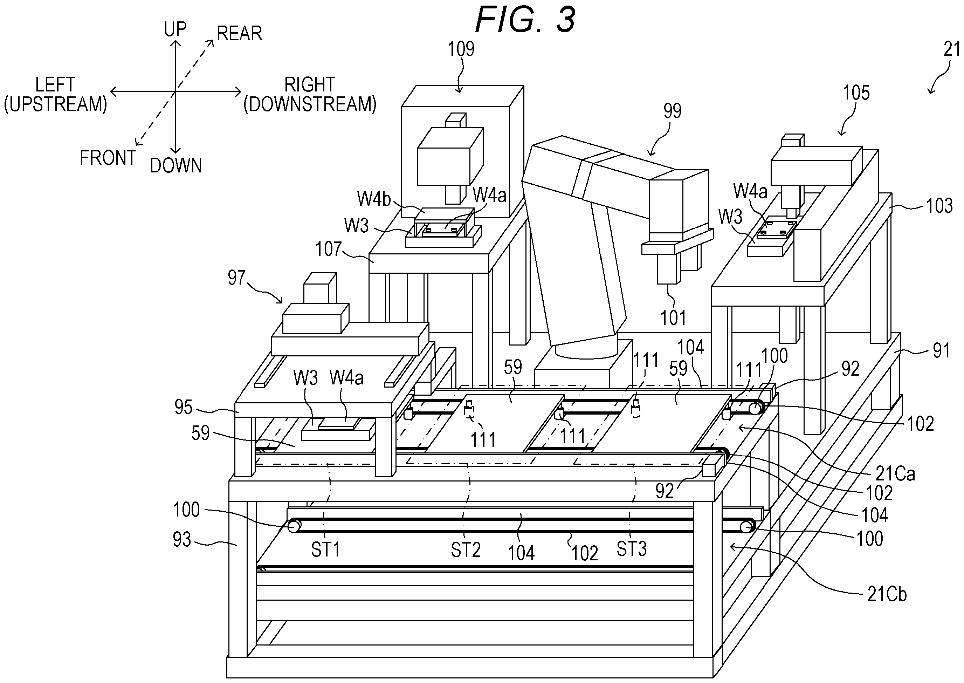

The third assembly cell 21 (an example of the first cell) is a cell disposed adjacent to the downstream side of the connection cell 19 and configured to perform assembly work on the first semi-finished product W3 and the component W4 (an example of the predetermined work). The third assembly cell 21 has a window 21B provided on a front side of a housing 21A, which makes an inside of the third assembly cell 21 visible from the front. As shown in FIG. 2, a transfer conveyor 21C (an example of the transfer device) made up of two upper and lower stages is installed inside the third assembly cell 21, a first transfer conveyor 21Ca (an example the first transfer device) serving as the upper stage transfers the second pallet 59 on which the first semi-finished product W3, the component W4, etc. assembled (simply denoted by "W" in FIG. 2) are placed to the downstream side, and a second transfer conveyor 21Cb (an example the second transfer device) serving as the lower stage transfers the second pallet 59 that is empty to the upstream side. A robot (refer to FIG. 3 to be described later) and dedicated work machines (refer to FIG. 3 to be described later) that each perform a corresponding one of various types of work are installed inside the third assembly cell 21, and the robot moves the first semi-finished product W3 and the component W4 between the second pallet 59 and each dedicated work machine. Examples of the work performed by each dedicated work machine in the third assembly cell 21 include mounting an interface substrate on the first semi-finished product W3, screwing an interface substrate, fitting an interface cover, and the like. The second pallet 59 on which the first semi-finished product W3 and the component W4 assembled are placed is transferred to the connection cell 23 that is the next cell by the first transfer conveyor 21Ca. Note that, in the following description, the first semi-finished product W3 and the component W4 assembled in the third assembly cell 21 are also referred to as "second semi-finished product W5" as needed.

As shown in FIG. 2, the third assembly cell 21 is equipped with a controller 71 that controls all devices in the third assembly cell 21, and a servomotor (not shown) that drives the transfer conveyors 21Ca, 21Cb, the robot, the automatic work machines, etc. are controlled by the controller 71. Further, in the third assembly cell 21, a camera, a sensor, etc. (not shown) configured to detect whether assembly work has been properly performed are installed, and the controller 71 determines whether the assembly work has failed based on the above-described detection result and causes, when determining that the assembly work has failed, a notification means (a touch screen, an alarm, or the like) (not shown) to make notification.

The connection cell 23 (an example of the second cell) is a cell disposed adjacent to the downstream side of the third assembly cell 21 and configured to connect the third assembly cell 21 and the third component supply cell 25. The connection cell 23 has an access space 23S (an example of the access part) provided behind a housing 23C located between the third assembly cell 21 and the third component supply cell 25, which allows the worker to make access to the second pallet 59 to perform at least either repairs or ejection on the component. As shown in FIG. 2, a transfer conveyor 23A (an example of the third transfer device) and a lift mechanism 48 are provided inside the connection cell 23, and the transfer conveyor 23A moves up and down. The lift mechanism 48 (an example of the moving mechanism) moves the transfer conveyor 23A between a position corresponding to the first transfer conveyor 21Ca of the third assembly cell 21 and a position corresponding to the second transfer conveyor 21Cb of the third assembly cell 21. In the connection cell 23, the second pallet 59 on which the second semi-finished product W5 is placed is transferred to a predetermined position by the transfer conveyor 23A moving upward, and the second semi-finished product W5 is taken out from the second pallet 59 by an automatic work machine (not shown). The second pallet 59 that is empty is moved downward by the transfer conveyor 23A and is then transferred to the upstream side. Accordingly, the second pallet 59 circulates through the connection cell 15, the second component supply cell 17, the connection cell 19, the third assembly cell 21, and the connection cell 23.

On the other hand, in the connection cell 23, a third pallet 73 that is empty and is returned from the downstream side is moved upward by the transfer conveyor 23A. The third pallet 73 is a member that includes protrusions and recesses or a positioning member (not shown) configured to position each component and on which the second semi-finished product W5, a component W6 to be described later, etc. are positioned at their respective predetermined portions. The above-described automatic work machine places the second semi-finished product W5 taken out from the second pallet 59 onto the third pallet 73. Accordingly, the second semi-finished product W5 is relocated from the second pallet 59 to the third pallet 73. Further, the transfer conveyor 23A moves the second pallet 59 and the third pallet 73 up and down alternately such that, when moving downward, the transfer conveyor 23A carries the second pallet 59 that is empty, and when moving upward, the transfer conveyor 23A carries the third pallet 73 that is empty.

Further, in the connection cell 23, when the notification means of the third assembly cell 21 makes notification that the assembly work has failed, the worker performs repairs on the second semi-finished product W5, or ejects, when the repairs are not possible, the defective product from the production line. Note that, even when no notification is made, the worker may check whether the assembly work has been properly performed on the second semi-finished product W5 in the third assembly cell 21 located on the upstream side and may perform, when the work has failed, repairs or ejection on the second semi-finished product W5. The third pallet 73 on which the second semi-finished product W5 assembled is placed is transferred to the third component supply cell 25 that is the next cell by the transfer conveyor 23A. As shown in FIG. 2, the connection cell 23 is equipped with a controller 75 that controls all devices in the connection cell 23, and a servomotor (not shown) that drives the transfer conveyors 23A and the automatic work machine are controlled by the controller 75.

Note that, in the connection cell 23, in addition to the above-described repair work and ejection work on the component, the worker may manually perform maintenance work, work that is difficult with the automatic work machine (such as wiring routing or complicated assembly work), and the like. Alternatively, the above-described work and the like may be performed by the automatic work machine. Further, in the above, the access space 23S is provided outside of (behind) the housing 23C. Alternatively, the access space 23S may be provided inside the housing 23C, and the housing 23C may have a door or the like provided to allow the worker to enter and exit from the housing 23C.

The third component supply cell 25 (an example of the first cell and the third cell) is a cell disposed adjacent to the downstream side of the connection cell 23 and configured to supply the component W6 (an example of the predetermined work). The third component supply cell 25 has a window 25B provided on a front side of a housing 25A, which makes an inside of the third component supply cell 25 visible from the front. As shown in FIG. 2, a transfer conveyor 25C (an example of the transfer device) made up of two upper and lower stages is installed inside the third component supply cell 25, a first transfer conveyor 25Ca (an example the first transfer device) serving as the upper stage transfers the third pallet 73 on which the second semi-finished product W5, the component W6, etc. (simply denoted by "W" in FIG. 2) are placed to the downstream side, and a second transfer conveyor 25Cb (an example the second transfer device) serving as the lower stage transfers the third pallet 73 that is empty to the upstream side.

As shown in FIG. 1, the third component supply cell 25 has a reception opening 77 through which the component container 37 containing the component W6 is received from the automatic guided vehicle 43, and an ejection opening 78 through which the component container 37 that is empty is ejected to the automatic guided vehicle 43 provided on the front side of the third component supply cell 25. The reception opening 77 is disposed adjacent to the left side, which is the upstream side, of the ejection opening 78 in the travel direction of the automatic guided vehicle 43 (indicated by the arrow 42 in the FIG. 1). A loading conveyor 79L is provided at the reception opening 77 and is configured to receive the component container 37 transferred by the conveyor 44 of the automatic guided vehicle 43 and to transfer the component container 37 into the cell. An automatic work machine (not shown) is installed inside the third component supply cell 25 and is configured to move the component W6 contained in the component container 37 to the third pallet 73. The component W6 is, for example, a panel or the like. The third pallet 73 on which the second semi-finished product W5, the component W6, etc. are placed is transferred to the connection cell 27 that is the next cell by the first transfer conveyor 25Ca. An unloading conveyor 79R is provided at the ejection opening 78 and is configured to eject the component container 37 that is empty to the conveyor 44 of the automatic guided vehicle 43. As described above, the automatic guided vehicle 43 moves to the reception opening 77 of the third component supply cell 25 to supply the component container 37 containing the component W6 to the reception opening 77, next moves to the ejection opening 78 to receive the component container 37 that is empty from the ejection opening 78, and then moves to a predetermined position.

As shown in FIG. 2, the third component supply cell 25 is equipped with a controller 81 that controls all devices in the third component supply cell 25, and a servomotor (not shown) that drives the transfer conveyors 25Ca, 25Cb, the automatic work machine, etc. are controlled by the controller 81. Further, in the third component supply cell 25, a camera, a sensor, etc. (not shown) configured to detect whether supply work has been properly performed are installed, and the controller 81 determines whether the supply work has failed based on the above-described detection result and causes, when determining that the supply work has failed, a notification means (a touch screen, an alarm, or the like) (not shown) to make notification.

Note that the component container 37 may be transferred by, for example, the worker using a trolley. Further, the component container 37 may be transferred in a single stack, or may be transferred with being stacked in three or more stages.

The connection cell 27 (an example of the second cell) is a cell disposed adjacent to the downstream side of the third component supply cell 25 and configured to connect the third component supply cell 25 and the fourth assembly cell 29. The connection cell 27 has an access space 27S (an example of the access part) provided behind a housing 27C located between the third component supply cell 25 and the fourth assembly cell 29, which allows the worker to make access to the third pallet 73 to perform at least either repairs or ejection on the component. As shown in FIG. 2, a transfer conveyor 27A (an example of the transfer device) made up of two upper and lower stages is installed inside the connection cell 27, a first transfer conveyor 27Aa serving as the upper stage transfers the third pallet 73 on which the second semi-finished product W5, the component W6, etc. are placed to the downstream side, and a second transfer conveyor 27Ab serving as the lower stage transfers the third pallet 73 that is empty to the upstream side. In the connection cell 27, when the notification means of the third component supply cell 25 makes notification that the supply work has failed, the worker repositions the component W6 on the third pallet 73 and performs repairs (including repairs on the component W6), or ejects, when the repairs are not possible, the third pallet 73 or the component W6 that is defective from the production line. Note that, even when no notification is made, the worker may check whether the component W6 has been properly supplied to the third pallet 73 in the third component supply cell 25 located on the upstream side and may perform, when the supply has failed, repairs or ejection. The third pallet 73 on which the second semi-finished product W5, the component W6, etc. are placed is transferred to the fourth assembly cell 29 that is the next cell by the first transfer conveyor 27Aa. As shown in FIG. 2, the connection cell 27 is equipped with a controller 83 that controls all devices in the connection cell 27, and a servomotor (not shown) that drives the transfer conveyors 27Aa, 27Ab is controlled by the controller 83.

Note that, in the connection cell 27, in addition to the above-described repair work and ejection work on the component, the worker may manually perform maintenance work or work that is difficult with an automatic work machine (for example, wiring routing or complicated assembly work). Alternatively, an automatic work machine may be installed in the connection cell 27 to perform the above-described work and the like. Further, in the above, the access space 27S is provided outside of (behind) the housing 27C. Alternatively, the access space 27S may be provided inside the housing 27C, and the housing 27C may have a door or the like provided to allow the worker to enter and exit from the housing 27C.

The fourth assembly cell 29 (an example of the first cell) is a cell disposed adjacent to the downstream side of the connection cell 27 and configured to perform assembly work on the second semi-finished product W5 and the component W6 (an example of the predetermined work). The fourth assembly cell 29 has a window 29B provided on a front side of a housing 29A, which makes an inside of the fourth assembly cell 29 visible from the front. As shown in FIG. 2, a transfer conveyor 29C (an example of the transfer device) made up of two upper and lower stages is installed inside the fourth assembly cell 29, a first transfer conveyor 29Ca (an example the first transfer device) serving as the upper stage transfers the third pallet 73 on which the second semi-finished product W5 and the component W6, etc. assembled (simply denoted by "W" in FIG. 2) are placed to the downstream side, and a second transfer conveyor 29Cb (an example the second transfer device) serving as the lower stage transfers the third pallet 73 that is empty to the upstream side. A robot (not shown) and dedicated work machines (not shown) that each perform a corresponding one of various types of work are installed inside the fourth assembly cell 29, and the robot moves the second semi-finished product W5 and the component W6 between the third pallet 73 and each dedicated work machine. Examples of the work performed by each dedicated work machine in the fourth assembly cell 29 include screwing to a ground, printing on a panel, fitting a panel, and the like. The third pallet 73 on which the second semi-finished product W5 and the component W6 assembled are placed is transferred to the connection cell 31 that is the next cell by the first transfer conveyor 29Ca. Note that, in the following description, the second semi-finished product W5 and the component W6 assembled in the fourth assembly cell 29 are also referred to as "product W7" as needed.

As shown in FIG. 2, the fourth assembly cell 29 is equipped with a controller 85 that controls all devices in the fourth assembly cell 29, and a servomotor (not shown) that drives the transfer conveyors 29Ca, 29Cb, the robot, the automatic work machines, etc. are controlled by the controller 85. Further, in the fourth assembly cell 29, a camera, a sensor, etc. (not shown) configured to detect whether assembly work has been properly performed are installed, and the controller 85 determines whether the assembly work has failed based on the above-described detection result and causes, when determining that the assembly work has failed, a notification means (a touch screen, an alarm, or the like) (not shown) to make notification.

The connection cell 31 (an example of the second cell) is disposed adjacent to the downstream side of the fourth assembly cell 29 and is disposed on the most downstream side of the production line 1. The connection cell 31 is a cell configured to connect the production line 1 and a subsequent process in the production line 1, in other words, a cell serving as an exit of the production line 1. Further, the connection cell 31 has an access space 31S (an example of the access part) provided behind a housing 31C, which allows the worker to make access to the third pallet 73 to perform at least either repairs or ejection on the component. As shown in FIG. 2, a transfer conveyor 31A (an example of the third transfer device) and a lift mechanism 50 are provided inside the connection cell 31, and the transfer conveyor 31A moves up and down. The lift mechanism 50 (an example of the moving mechanism) moves the transfer conveyor 31A between a position corresponding to the first transfer conveyor 29Ca of the fourth assembly cell 29 and a position corresponding to the second transfer conveyor 29Cb of the fourth assembly cell 29. In the connection cell 31, the third pallet 73 on which the product W7 is placed is transferred to a predetermined position by the transfer conveyor 31A moving upward, and the product W7 is taken out from the third pallet 73 by an automatic work machine (not shown). The third pallet 73 that is empty is moved downward by the transfer conveyor 31A and is then transferred to the upstream side. Accordingly, the third pallet 73 circulates through the connection cell 23, the third component supply cell 25, the connection cell 27, the fourth assembly cell 29, and the connection cell 31.

Further, in the connection cell 31, when the notification means of the fourth assembly cell 29 makes notification that the assembly work has failed, the worker performs repairs on the product W7, or ejects, when the repairs are not possible, the defective product W7 from the production line. Note that, even when no notification is made, the worker may check whether the assembly work has been properly performed on the second semi-finished product W5 and the component W6 in the fourth assembly cell 29 located on the upstream side and may perform, when the work has failed, repairs or ejection. The product W7 assembled is taken out from the third pallet 73 by the automatic work machine, and is carried to the subsequent process by the worker or the like. As shown in FIG. 2, the connection cell 31 is equipped with a controller 87 that controls all devices in the connection cell 31, and a servomotor (not shown) that drives the transfer conveyor 31A and the automatic work machine are controlled by the controller 87.

Note that, in the connection cell 31, in addition to the above-described repair work and ejection work on the product W7, the worker may manually perform maintenance work, work that is difficult with the automatic work machine (such as wiring routing or complicated assembly work), and the like. Alternatively, the above-described work and the like may be performed by the automatic work machine. Further, in the above, the access space 31S is provided outside of (behind) the housing 31C. Alternatively, the access space 31S may be provided inside the housing 31C, and the housing 31C may have a door or the like provided to allow the worker to enter and exit from the housing 31C.

As described above, each cell includes a corresponding one of the controllers 35, 47, 49, 53, 55, 57, 61, 67, 69, 71, 75, 81, 83, 85, 87, each controller being configured to control the devices in a corresponding cell independently of the other cells. As shown in FIG. 2, these controllers are connected to the host controller 89 and are controlled by the host controller 89 in a coordinated manner. Note that each controller may be installed separately from a corresponding cell. Further, the host controller 89 may be installed in any cell, or alternatively, may be installed separately from the cells. Further, any one of the controllers 35, 47, 49, 53, 55, 57, 61, 67, 69, 71, 75, 81, 83, 85, 87 may serve as the above-described controller 89. Further, each controller and the host controller 89 may be implemented by either or both of a programmable logic controller (PLC) and a robot controller (RC).

Note that the cell combination of the production line 1 described above is an example, and is not limited to the above-described structure. For example, the number, arrangement, and combination of the cells may be changed in a manner that depends on the type and quantity of products to be produced, fluctuations in work processes, and the like. Further, in addition to or in place of the above-described cells, cells to which work different from the work assigned to the above-described cells is assigned may be combined.

### <2. Internal structure of assembly cell>

Next, a description will be given of an internal structure of the third assembly cell 21 as an example of the internal structure of the assembly cell in the production line 1 with reference to FIGS. 3 and 4. FIG. 3 is an explanatory diagram showing an example of the internal structure of the third assembly cell 21, and FIG. 4 is an explanatory diagram showing an example of a structure of a positioning mechanism 94. Note that, in FIGS. 3 and 4, parts and the like other than a base of the housing 21A, a positioning member of the second pallet 59, and the like are not shown as needed.

As shown in FIG. 3, the housing 21A of the third assembly cell 21 includes a base 91. On the front side of the base 91, the above-described first transfer conveyor 21Ca and second transfer conveyor 21Cb are installed on a platform 93 in two upper and lower stages. Above the left side (upstream side) of the first transfer conveyor 21Ca, a substrate mounting machine 97 is installed via a platform 95. The substrate mounting machine 97 is a dedicated work machine that is equipped with an actuator movable in the XYZ directions and is configured to perform substrate mounting work of mounting the above-described interface substrate (hereinafter, referred to as "interface substrate W4a") on the first semi-finished product W3.

A robot 99 of a vertically articulated type having, for example, six joints (six axes) is installed approximately at a center of the base 91. The robot 99 holds and moves the component with a hand 101. On a rear right side of the base 91, a screwing machine 105 is installed via a platform 103. The screwing machine 105 is a dedicated work machine that is equipped with an actuator movable the XYZ directions and is configured to perform screwing work of screwing the interface substrate W4a to the first semi-finished product W3. On a rear left side of the base 91, a cover fitting machine 109 is installed via a platform 107. The cover fitting machine 109 is a dedicated work machine that is equipped with an actuator movable in the XYZ directions and is configured to perform cover fitting work of fitting the above-described interface cover (hereinafter, referred to as "interface cover W4b") to the first semi-finished product W3.

The first transfer conveyor 21Ca includes a pulley 100 provided at both ends in the transfer direction (left-right direction), a pair of narrow belts 102 wound on the pulley 100 and provided along both ends of the conveyor in the width direction (front-rear direction), and a pair of plate members 104 provided on the outer side of the pulley 100 and the belt 102 in the width direction. The pulley 100 is driven by a servomotor 92. The plate member 104 comes into contact with both ends of the second pallet 59 to be transferred to position the second pallet 59 in the width direction. The transfer conveyor 21Cb has the same structure.

The first transfer conveyor 21Ca causes the second pallet 59 to stop at, for example, three work stations ST1, ST2, ST3 under position control of the controller 71 described above. Each work station is a stop position where the second pallet 59 is stopped for a predetermined time. A predetermined assembly work process is assigned to each work station. Note that the assigned work may be performed at each work station or at another position. Further, the number of work stations is not limited to a specific number and may be other than three, but, according to the present embodiment, three work stations are set in consideration of a tact time set for the third assembly cell 21 (a time from when the second semi-finished product W5 is supplied from the third assembly cell 21 to the connection cell 23 to when the next second semi-finished product W5 is supplied to the connection cell 23, that is, a supply interval time of the second semi-finished product W5), performance of the robot 99 (movable range, payload, movable speed, etc.), and the like, thereby making optimization for an increase in work efficiency of the robot and a reduction in tact time.

The first work station ST1 is located under the substrate mounting machine 97 and is assigned the substrate mounting work process. This substrate mounting work is performed at the first work station ST1. That is, the interface substrate W4a is mounted, by the substrate mounting machine 97, onto the first semi-finished product W3 on the second pallet 59 that has stopped at the work station ST1.

Further, both the screwing work process and the cover fitting work process are assigned to the second work station ST2 and the third work station ST3. The screwing work and cover fitting work are each performed at a position different from the work stations ST2, ST3. That is, a workpiece (the first semi-finished product W3 on which the interface substrate W4a is mounted) placed on the second pallet 59 that has stopped at the second work station ST2 is moved to the screwing machine 105 by the robot 99 and is subjected to the screwing work. During this time, the second pallet 59 from which the workpiece has been taken out at the second work station ST2 is moved to the third work station ST3. Next, the workpiece (the first semi-finished product W3 to which the interface substrate W4a is screwed) is moved to the cover fitting machine 109 by the robot 99 and is subjected to the cover fitting work. Subsequently, the workpiece (the first semi-finished product W3 to which the interface cover W4b is fitted) is moved, by the robot 99, to the second pallet 59 that has stopped at the third work station ST3.

In the above, when the second pallet 59 from which the workpiece has been taken out at the second work station ST2 is moved to the third work station ST3, another second pallet 59 is moved from the first work station ST1 to the second work station ST2 that is vacant. Then, the same work processes as described above are repeated.

Note that one work may be assigned to one work station such that the screwing work is assigned to the second work station ST2, and the cover fitting work is assigned to the third work station ST3. In this case, the workpiece subjected to the screwing work by the screwing machine 105 is returned to the second pallet 59 at the second work station ST2, and is then moved, after the second pallet 59 is moved to the third work station ST3, to the cover fitting machine 109, which leads to an increase in tact time. According to the present embodiment, assigning the same work to the second work station ST2 and the third work station ST3 as described above makes it possible to move the workpiece subjected to the screwing work by the screwing machine 105 to the cover fitting machine 109 without returning the workpiece to the second work station ST2, which allows a reduction in tact time.

Further, the work stations ST1, ST2, ST3 are each provided, inside the pair of belts 102, with a push-up mechanism 111 that pushes up the second pallet 59 from a transfer surface of the first transfer conveyor 21Ca by a predetermined amount. The push-up mechanism 111 is made up of, for example, a linear actuator disposed under four corners of the second pallet 59 and configured to extend and contract in the up-down direction. The push-up mechanism 111 allows only the second pallet 59 located at any one of the work stations ST1, ST2, ST3 to be separately transferred. This allows, for example, when a work station located on the downstream side becomes vacant (having no pallet), the second pallet 59 at a work station located on the upstream side to be immediately and separately moved so as to fill the vacancy. Further, for example, it is possible to deliver, with the second pallets 59 left at the work stations ST1, ST2, only the second pallet 59 at the work station ST3 to the connection cell 23 that is the next cell, or to receive, with the second pallets 59 left at the work stations ST2, ST3, the second pallet 59 from the connection cell 19 that is the previous cell to the work station ST1.

Further, the first work station ST1 disposed on the most upstream side of the first transfer conveyor 21Ca in the transfer direction is provided with the positioning mechanism 94 configured to position the second pallet 59 at a predetermined position. As shown in FIG. 4, the positioning mechanism 94 includes a pair of linear actuators 96 arranged at two positions in the width direction (front-rear direction) of the conveyor and configured to extend and contract in the up-down direction, a pair of linear actuators 98 configured to extend and contract in the transfer direction (left-right direction), and a pair of lift actuators 106 configured to lift and lower these linear actuators 98 in the up-down direction. Further, the second pallet 59 includes a pair of recess portions 108 (not shown in FIG. 3) into which the linear actuators 96 can be fitted at positions corresponding to the pair of linear actuators 96.

As shown in FIG. 4, with the linear actuators 96, 98 contracted and the linear actuators 98 lowered, the second pallet 59 is transferred from the connection cell 19 to the work station ST1 and is then stopped. Next, the linear actuators 96 are extended, and the linear actuators 98 are lifted by the lift actuators 106. Then, the linear actuators 98 are extended to push the second pallet 59 toward the downstream side, so that the recess portions 108 fit into the linear actuators 96 to position the second pallet 59 at a predetermined position. Accordingly, after the second pallet 59 is positioned at the first work station ST1, the second pallet 59 is stopped at the second work station ST2 and the third work station ST3 under the position control and speed control of the servomotor 92 that drives the first transfer conveyor 21Ca. This eliminates the need for installing, at each work station, a sensor configured to detect the pallet.

The above-described substrate mounting machine 97, robot 99, screwing machine 105, cover fitting machine 109, transfer conveyors 21Ca, 21Cb, push-up mechanism 111, and positioning mechanism 94 are collectively controlled by the above-described controller 71.

Note that the structure of the third assembly cell 21 described above is an example, and is not limited to the above-described structure. For example, the robot 99 may be a robot other than a robot having six axes (for example, a robot having five axes, seven axes, or the like), or may be a robot such as a horizontally articulated robot other than a vertically articulated robot. Further, instead of a robot having a plurality of joints, a dedicated work machine configured to transfer a workpiece and equipped with an actuator capable of moving in at least one of the XYZθ directions may be employed. Further, at least one of the works performed by the above-described dedicated work machine may be assigned to the robot 99, and the corresponding dedicated work machine may be removed. Further, in addition to or in place of the above-described dedicated work machine, a dedicated work machine configured to perform different work may be installed. Further, instead of positioning the first transfer conveyor 21Ca under the control of the servomotor, with a sensor configured to detect the second pallet 59 provided at each of the work stations ST1, ST2, ST3, the first transfer conveyor 21Ca may be controlled based on the detection result from the sensor.

### <3. Internal structure and operation of component supply cell>

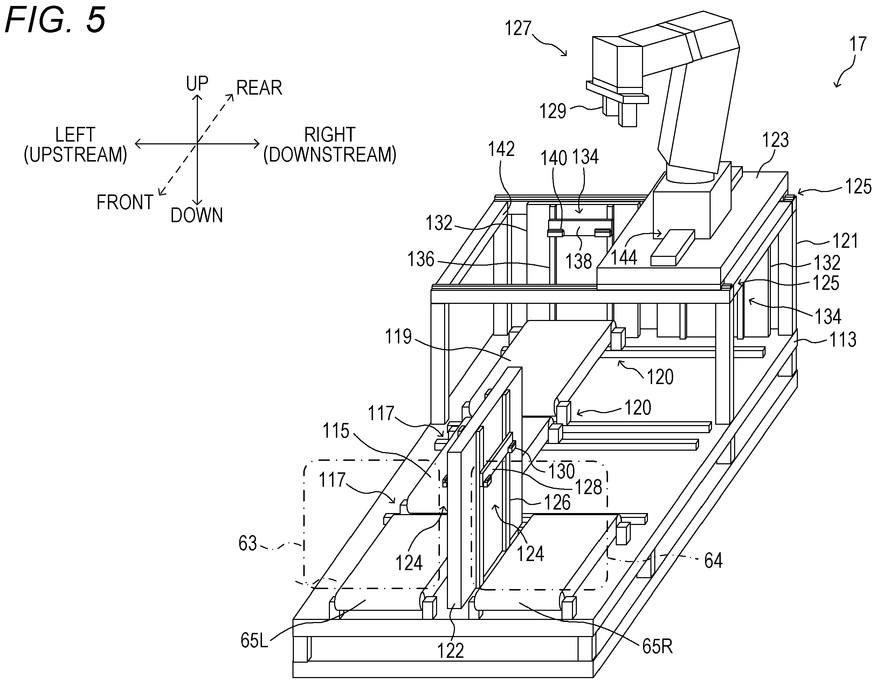

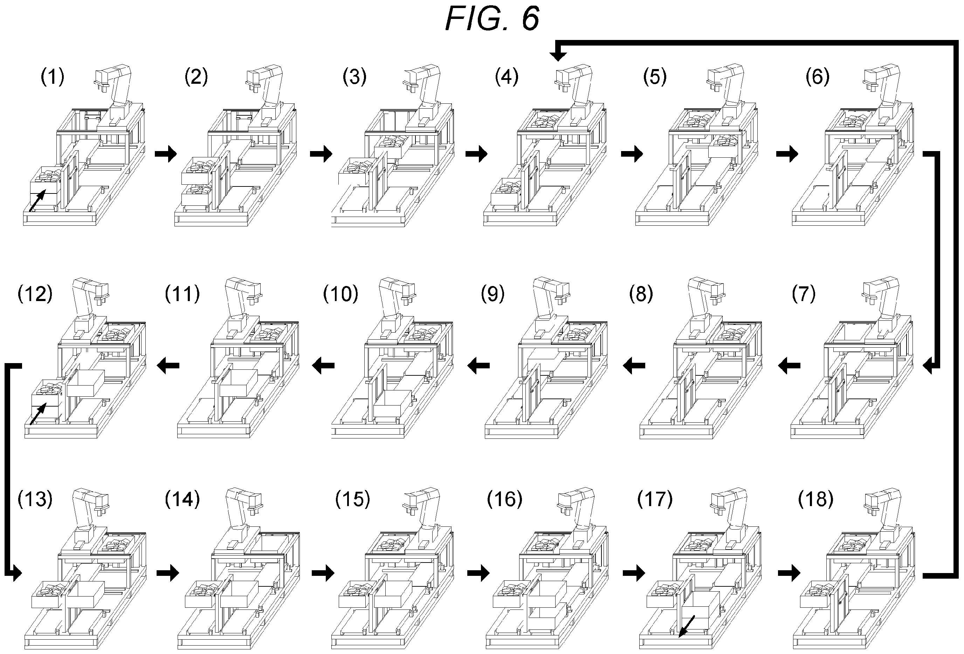

Next, a description will be given of an internal structure and operation of the second component supply cell 17 as an example of the internal structure and operation of the component supply cell in the production line 1 with reference to FIGS. 5 and 6. FIG. 5 is an explanatory diagram showing an example of the internal structure of the second component supply cell 17, and FIG. 6 is an explanatory diagram showing an example of the operation of the second component supply cell 17. Note that, in FIGS. 5 and 6, parts other than a base of the housing 17A, the transfer conveyors 17Ca, 17Cb, and the like are not shown as needed.

As shown in FIG. 4, the housing 17A of the second component supply cell 17 includes a base 113. On a front side of the base 113, the above-described loading conveyor 65L and unloading conveyor 65R are installed so as to correspond to the reception opening 63 and the ejection opening 64, respectively. A first transfer conveyor 115 is installed approximately at a center of the base 113 in the front-rear direction. The first transfer conveyor 115 is moved in the left-right direction by a slide mechanism 117, so as to be movable to a position corresponding to the loading conveyor 65L and a position corresponding to the unloading conveyor 65R. A second transfer conveyor 119 is installed on a rear side of the base 113. The second transfer conveyor 119 is moved in the left-right direction by a slide mechanism 120, so as to be movable to a position corresponding to the loading conveyor 65L and a position corresponding to the unloading conveyor 65R.

Note that, although not shown, the above-described first transfer conveyor 17Ca and second transfer conveyor 17Cb are installed above and below the first transfer conveyor 115, respectively.

A first component container lift mechanism 124 is provided on both left and right side surfaces of a partition wall 122 serving as a partition between the reception opening 63 and the ejection opening 64. The first component container lift mechanism 124 includes, for example, a pair of guide rails 126, a lift member 128 configured to move up and down along the guide rails 126, and, for example, a pair of clamp members 130 attached to the lift member 128. The clamp members 130 are capable of holding the component container 37 by engaging with an engaging portion (not shown) such as a flange of the component container 37, for example. This allows the first component container lift mechanism 124 provided adjacent to the reception opening 63 to hold the component container 37 containing the component W4 received from the reception opening 63 and to lift and lower the component container 37. This further allows the first component container lift mechanism 124 provided adjacent to the ejection opening 64 to hold the empty component container 37 to be ejected from the ejection opening 64 and to lift and lower the empty component container 37.

On a rear side wall 132 on the rear side of the second transfer conveyor 119, a second component container lift mechanism 134 is provided at a position corresponding to the loading conveyor 65L and a position corresponding to the unloading conveyor 65R. The second component container lift mechanism 134 includes, for example, a pair of guide rails 136, a lift member 138 configured to move up and down along the guide rails 136, and, for example, a pair of clamp members 140 attached to the lift member 138. The clamp members 140 are capable of holding the component container 37 by engaging with the engaging portion (not shown) such as the flange of the component container 37, for example. This allows the second component container lift mechanism 134 provided on the left side to hold the component container 37 placed on the second transfer conveyor 119 moved to the left side and to lift and lower the component container 37. Similarly, this allows the second component container lift mechanism 134 provided on the right side to hold the component container 37 placed on the second transfer conveyor 119 moved to the right side and to lift and lower the component container 37.

A robot base 123 is installed above the second transfer conveyor 119 via a platform 121. The robot base 123 is moved in the left-right direction by a slide mechanism 125 to form an opening 142 that exposes the component container 37 on an opposite side with respect to the travel direction. That is, as shown in FIG. 5, when the robot base 123 moves to the right side, the opening 142 is formed on the left side, and conversely, when the robot base 123 moves to the left side, the opening 142 is formed on the right side. At the opening 142, the component container 37 is lifted, by the second component container lift mechanism 134, to a height where the component container 37 does not come into contact with the robot base 123. A robot 127 of a vertically articulated type having, for example, six joints (six axes), is installed on the robot base 123, and the robot 127 can be moved, by a slide mechanism 144, by a predetermined amount in the front-rear direction as needed. The robot 127 holds, with a hand 129, the component W4 contained in the component container 37 through the opening 142 and moves the component W4 to the second pallet 59 on the first transfer conveyor 17Ca serving as the upper stage.

The above-described loading conveyor 65L, unloading conveyor 65R, first component container lift mechanism 124, first transfer conveyor 115, slide mechanism 117, second transfer conveyor 119, slide mechanism 120, second component container lift mechanism 134, slide mechanism 125, slide mechanism 144, robot 127, and the like are collectively controlled by the above-described controller 67.

Next, a description will be given of the operation of the second component supply cell 17 having the above-described structure with reference to FIG. 6. In FIG. 6, reference numerals are not shown in order to prevent the illustration from becoming complicated.

For example, from the state shown in FIG. 5, as shown in an operation step (1) of FIG. 6, the loading conveyor 65L receives the two-stacked component containers 37 containing the component W4 from the automatic guided vehicle 43 at the reception opening 63. Next, as shown in an operation step (2), the first component container lift mechanism 124 holds and lifts an upper component container 37. Next, as shown in an operation step (3), the loading conveyor 65L, the first transfer conveyor 115, and the second transfer conveyor 119 transfer a lower component container 37 to the left rear side. Next, as shown in an operation step (4), the second component container lift mechanism 134 lifts the component container 37 and exposes the component container 37 from the opening 142 on the left side. This allows the robot 127 to start work of moving (supplying) the component W4 contained in the component container 37 held in the opening 142 on the left side to the second pallet 59 on the first transfer conveyor 17Ca. Further, the upper component container 37 held by the first component container lift mechanism 124 is lowered onto the loading conveyor 65L.

Next, as shown in an operation step (5), the loading conveyor 65L, the first transfer conveyor 115, and the second transfer conveyor 119 transfer the second component container 37 to the left rear side, and the first transfer conveyor 115 and the second transfer conveyor 119 move to the right side to move the component container 37 to the right rear side (under the robot base 123). Next, as shown in an operation step (6), the second component container lift mechanism 134 lifts the component container 37 and holds the component container 37 under the robot base 123. Next, as shown in an operation step (7), the first transfer conveyor 115 and the second transfer conveyor 119 move to the left side before the component container 37 held in the opening 142 on the left side becomes empty. When the component container 37 becomes empty, the robot base 123 moves to the left side as shown in an operation step (8), and the component container 37 held on the right rear side is exposed from the opening 142 formed on the right side. This allows the robot 127 to start work of moving (supplying) the component W4 contained in the component container 37 held in the opening 142 on the right side to the second pallet 59 on the first transfer conveyor 17Ca.

Next, as shown in an operation step (9), the second component container lift mechanism 134 lowers the empty component container 37 located on the left side onto the second transfer conveyor 119. Next, as shown in an operation step (10), the first transfer conveyor 115 and the second transfer conveyor 119 move to the right side, and the first transfer conveyor 115, the second transfer conveyor 119, and the unloading conveyor 65R move the empty component container 37 to a position near the ejection opening 64. Next, as shown in an operation step (11), the first component container lift mechanism 124 holds and lifts the empty component container 37. Next, as shown in an operation step (12), the loading conveyor 65L receives the two-stacked component containers 37 containing the component W4 from the automatic guided vehicle 43 at the reception opening 63.

Next, as shown in an operation step (13), the first component container lift mechanism 124 adjacent to the reception opening 63 holds and lifts the upper component container 37. Further, the loading conveyor 65L, the first transfer conveyor 115, and the second transfer conveyor 119 transfer the lower component container 37 to the left rear side, and the second component container lift mechanism 134 lifts the component container 37 and holds the component container 37 under the robot base 123. Next, as shown in an operation step (14), the first transfer conveyor 115 and the second transfer conveyor 119 move to the right side before the component container 37 held in the opening 142 on the right side becomes empty. When the component container 37 becomes empty, the robot base 123 moves to the right side as shown in an operation step (15), and the component container 37 held on the left rear side is exposed from the opening 142 formed on the left side. This allows the robot 127 to start work of moving (supplying) the component W4 contained in the component container 37 held in the opening 142 on the left side to the second pallet 59 on the first transfer conveyor 17Ca. Next, as shown in an operation step (16), the second component container lift mechanism 134 lowers the empty component container 37 located on the right side onto the second transfer conveyor 119, and the second transfer conveyor 119, the first transfer conveyor 115, and the unloading conveyor 65R moves the empty component container 37 to a position near the ejection opening 64.

Next, as shown in an operation step (17), the empty component container 37 held by the first component container lift mechanism 124 is lowered to form two-stacked empty component containers 37, and the unloading conveyor 65R ejects the two-stacked empty component containers 37 from the ejection opening 64 to the automatic guided vehicle 43. Note that the automatic guided vehicle 43 corresponds to an automatic guided vehicle 43 that becomes empty by supplying the component containers 37 to the reception opening 63 in the operation step (12). Next, as shown in an operation step (18), the first transfer conveyor 115 and the second transfer conveyor 119 move to the left side. Next, returning to the operation step (4), the upper component container 37 held by the first component container lift mechanism 124 is lowered onto the loading conveyor 65L. Thereafter, the operation step (5) and subsequent steps are repeated.

Repeating the above-described operation steps allows, during component supply from the component container 37 located on one side of the platform 121 in the left-right direction, the empty component container 37 located on the other side of the platform 121 in the left-right direction to be unloaded and the component container 37 containing the component to be loaded, set, and the like, which allows a reduction in tact time.

Note that the structure and operation steps of the second component supply cell 17 described above are examples, and are not limited to the above-described structure and operation steps. For example, the robot 127 may be a robot other than a robot having six axes (for example, a robot having five axes, seven axes, or the like), or may be a robot such as a horizontally articulated robot other than a vertically articulated robot. Further, instead of a robot having a plurality of joints, a dedicated work machine configured to transfer a workpiece and equipped with an actuator capable of moving in at least one of the XYZθ directions may be employed.

### <4. Method of manufacturing production line>

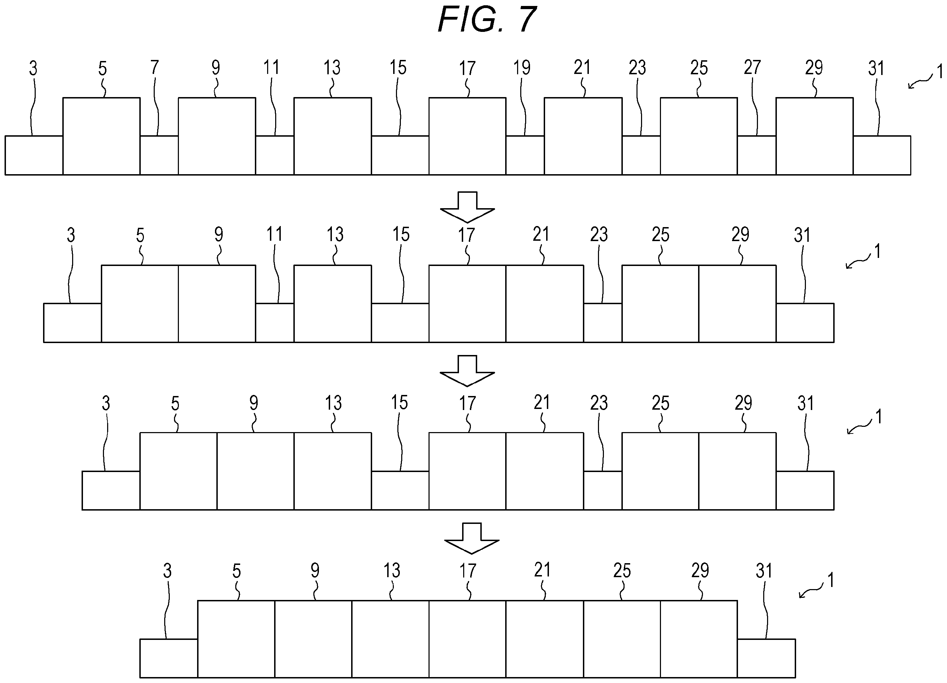

Next, a description will be given of an example of the method of manufacturing the production line 1 with reference to FIGS. 7 to 9.

The production line 1 described above is manufactured by arranging the assembly cells 9, 13, 21, 29 and the component supply cells 5, 17, 25 (hereinafter, referred to as "work cells 5, 9, 13, 17, 21, 25, 29") each equipped with a corresponding automatic work machine that performs predetermined work on the component and arranging the connection cells 3, 7, 11, 15, 19, 23, 27, 31 where the component can be repaired or ejected adjacent to the work cells 5, 9, 13, 17, 21, 25, 29 as needed. Herein, "as needed" corresponds to, for example, a case where, when the reliability and certainty of work in each assembly cell and each component supply cell are high, a structure having no connection cells can be employed; on the other hand, for example, when the reliability and certainty of work in a specific assembly cell or component supply cell is too low to achieve complete automation, when priority is given to an increase in yield in the production line or to continuation of production, or the like, a connection cell is disposed adjacent to a corresponding assembly cell or component supply cell. In the production line 1 according to the present embodiment, in order to ensure the reliability and certainty of work in each assembly cell and each component supply cell and to prioritize the continuation of production, the connection cells 3, 7, 11, 15, 19, 23, 27, 31 are arranged adjacent to all the work cells 5, 9, 13, 17, 21, 25, 29 (the structure shown in the first row of FIG. 7).

In the production line 1 structured as described above, a connection cell disposed adjacent to a specific assembly cell or component supply cell may be removed based on the reliability of the work performed by the automatic work machine in each assembly cell and each component supply cell. For example, when the reliability and certainty of work in the component supply cells 5, 17, 25 are increased due to the introduction of a new automatic work machine, technological improvements, technological innovations, etc., removal of the connection cells 7, 19, 27 each adjacent to the downstream side of a corresponding one of the component supply cells 5, 17, 25 makes it possible to optimize the layout of the production line 1 (the structure shown in the second row of FIG. 7).

Similarly, for example, when the reliability and certainty of work in the assembly cells 9, 13, 21, 29 are increased due to the introduction of a new automatic work machine, technological improvements, technological innovations, etc., removal of the connection cells 11, 15, 23, 31 each adjacent to the downstream side of a corresponding one of the assembly cells 9, 13, 21, 29 makes it possible to further optimize the layout of production line 1. Note that, according to the present embodiment, of the connection cells 11, 15, 23, 31, the connection cells 15, 23, 31 are each provided with the lift mechanism for the transfer conveyor to form a pallet circulation structure, which makes it possible to form a structure without the connection cell 11 having no lift mechanism (the structure shown in the third row of FIG. 7).

Assuming that, for example, the production line 1 is a production line that uses only one type of pallet without changing the type of pallet in the course of the line due to that there are few components to be used, or that the pallet can be sufficiently large in size, it is possible to remove the connection cells 15, 23 together with the connection cell 11. In this case, it is possible to implement a production line from which all the connection cells located in the course of the line other than the connection cells 3, 31 adjacent to the entrance and exit of the production line are removed (the structure shown in the fourth row of FIG. 7).

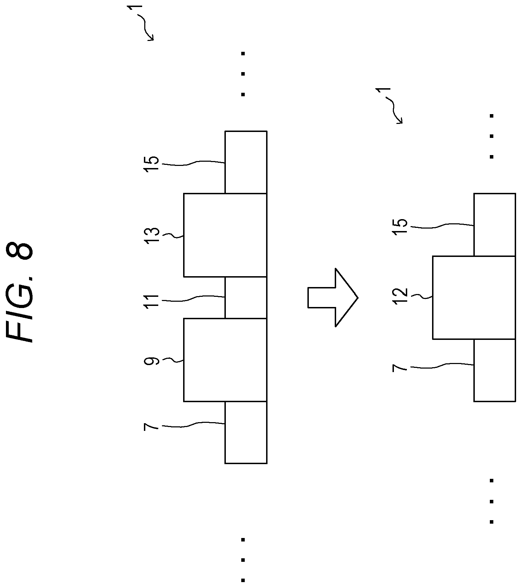

On the other hand, for the production line 1 according to the present embodiment, it is easy to make a plurality of cells into a single cell or a single cell into a plurality of cells. For example, as shown in FIG. 8, when it is possible to replace the first assembly cell 9 and the second assembly cell 13 with a single assembly cell 12 due to the introduction of a new automatic work machine, technological improvements, technological innovations, etc., removal of the connection cell 11 disposed between the first assembly cell 9 and the second assembly cell 13 and replacement of the first assembly cell 9 and the second assembly cell 13 with the assembly cell 12 makes it possible to optimize the layout of the production line 1.

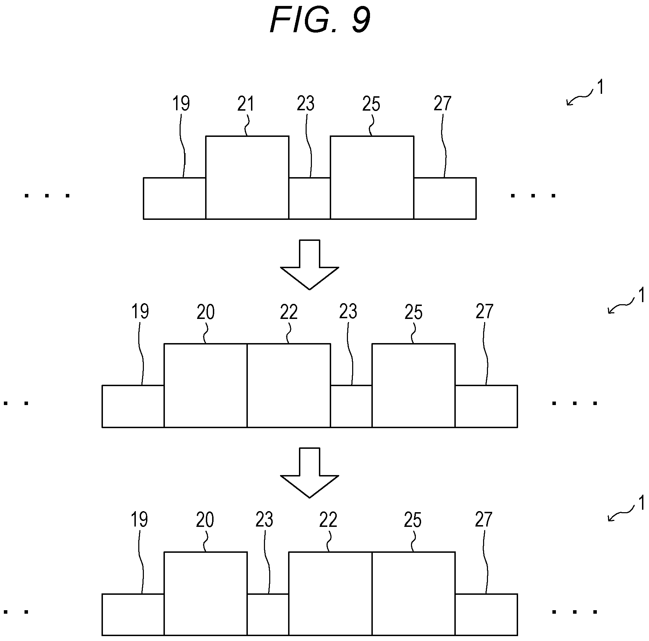

Further, for example, in the third assembly cell 21, when the reliability and certainty of the substrate mounting work assigned to the first work station ST1 and the cover fitting work assigned to the third work station ST3 are high enough to achieve complete automation, but the reliability and certainty of the screwing work assigned to the second work station ST2 is too low to achieve complete automation, the third assembly cell 21 may be made into a plurality of cells as follows, for example. That is, as shown in FIG. 9, the third assembly cell 21 is divided into a plurality of cells including an assembly cell 20 having the first work station ST1 and the second work station ST2, and an assembly cell 22 having the third work station ST3. Then, the connection cell 23 disposed adjacent to the third assembly cell 21 is moved and disposed adjacent to the downstream side of the assembly cell 20 having the second work station ST2 that is low in reliability and the like (a new connection cell may be provided), and the third component supply cell 25 is disposed directly adjacent to the downstream side of the assembly cell 22 having the third work station ST3 that is high in reliability and the like with no connection cell disposed adjacent to the downstream side of the assembly cell 22. Accordingly, for example, the layout of the production line 1 can be optimized.

### <5. Example of effect of embodiment>

As described above, the production line 1 according to the present embodiment is a production line for producing products including a combination of a plurality of cells, and the plurality of cells include the work cells 5, 9, 13, 17, 21, 25, 29 each equipped with an automatic work machine configured to perform predetermined work on the component, and the connection cells 3, 7, 11, 15, 19, 23, 27, 31 each disposed adjacent to a corresponding one of the work cells and capable of repairing or ejecting the component.

This allows the component to be repaired or ejected in the connection cells 3, 7, 11, 15, 19, 23, 27, 31 even when the predetermined work is not properly performed in the work cells 5, 9, 13, 17, 21, 25, 29, and in turn makes it possible to continue the production of the products without stopping the production line 1. Further, the production line 1 structured as described allows, when the reliability and certainty of work in the work cells 5, 9, 13, 17, 21, 25, 29 are increased due to, for example, the introduction of a new automatic work machine, technological improvements, technological innovations, etc., a connection cell adjacent to a corresponding work cell to be removed. Further, for example, in order to increase the yield in the production line 1 and the like, connection cells can be added to work cells having no connection cells 3, 7, 11, 15, 19, 23, 27, 31 disposed adjacent to the work cells at a time of establishing a new production line. Further, for example, when the number, arrangement, type, combination, etc. of the work cells are changed in a manner that depends on the type and quantity of products to be produced, fluctuations in the production process, etc., it is possible to add, remove, or change the connection cells in a manner that depends on the reliability and certainty of the work in a changed work cell and the like. Accordingly, the layout of the production line can be optimized, so that high flexibility (adjustability, adaptability, versatility) can be realized.

Further, according to the present embodiment, in particular, the connection cells 3, 7, 11, 15, 19, 23, 27, 31 include the access parts 3S, 7S, 11S, 15S, 19S, 23S, 27S, 31S, respectively, that allow the worker to repair or eject the component. This allows, when the predetermined work is not properly performed on the component in the work cells 5, 9, 13, 17, 21, 25, 29, the worker to make repairs on the component or eject, when the repairs are not possible, the component from production line 1. As described above, the worker performs the work assigned to the connection cell, allowing the worker to perform not only the repair work and ejection work on the component, but also, for example, visual inspection work, maintenance work, work difficult with the automatic work machine, and the like. Further, making the connection cell unautomated allows the work cell to be automated, allowing the automation of the production line 1 to be promoted. Further, as compared with the case where the work assigned to the connection cell is performed by the automatic work machine, the cost can be reduced because the automatic work machine, a specifically designed hand for holding the component, and the like are not required.

Further, according to the present embodiment, in particular, the work cells 5, 9, 13, 17, 21, 25, 29 include the first transfer conveyors 5Ca, 9Ca, 13Ca, 17Ca, 21Ca, 25Ca, 29Ca configured to transfer the pallets 33, 59, 73 on which the component is placed to the downstream side in the transfer direction of the component in the production line 1, and the second transfer conveyors 5Cb, 9Cb, 13Cb, 17Cb, 21Cb, 25Cb, 29Cb configured to transfer 33, 59, 73 from which the component has been taken out to the upstream side in a direction opposite to the transfer direction.

The use of the pallets 33, 59, 73 makes it possible to position the component to be transferred and in turn makes it possible to improve the handleability and work accuracy affected by the automatic work machine. Further, the first transfer conveyor transfers the pallets 33, 59, 73 on which the component is placed to the downstream side, and the second transfer conveyor transfers the pallets 33, 59, 73 from which the component has been taken out to the upstream side, thereby allowing the pallets 33, 59, 73 to circulate in the production line 1. This allows, as compared with the case where a used pallet is transferred from the exit of the production line 1 to the entrance of the production line 1 by a trolley or an automatic guided vehicle, a significant reduction in the number of pallets and further allows a reduction in cost because a pallet transfer means such as an automatic guided vehicle is not required.

Further, according to the present embodiment, in particular, the connection cells 3, 15, 23, 31 include the transfer conveyors 3C, 15D, 23A, 31A capable of transferring the pallets 33, 59, 73 to both the upstream side and the downstream side, and the lift mechanism 32, 46, 48, 50 configured to move the transfer conveyors 3C, 15D, 23A, 31A between the position corresponding to the first transfer conveyor of the work cell and the position corresponding to the second transfer conveyor of the work cell.

This allows a combination of the work cells 5, 9, 13, 17, 21, 25, 29 and the connection cells 3, 15, 23, 31 and the like to implement a circulation structure for the pallets 33, 59, 73. Further, providing the lift mechanisms 32, 46, 48, 50 for the transfer conveyors 3C, 15D, 23A, 31A in the connection cell allows only the connection cell rather than the work cell to change the transfer direction of the pallets 33, 59, 73, allowing standardization of the work cell. Further, for example, the lift mechanisms 32, 46, 48, 50 allow different types of pallets to be moved alternately such that the lift mechanisms 32, 46, 48, 50 carry one pallet when moving the transfer conveyors 3C, 15D, 23A, 31A downward, and carry a different pallet when moving upward. This makes it possible to change the types of pallets 33, 59, 73 in the course of the production line 1, which eliminates the need for placing all components on one pallet, makes it possible to downsize the pallet, and in turn makes it possible downsize the transfer conveyor and the production line 1.

Further, according to the present embodiment, in particular, the third assembly cell 21 includes the plurality of work stations ST1, ST2, ST3 serving as stop positions where the pallet 59 transferred by the first transfer conveyor 21Ca is stopped for a predetermined stop time, the plurality of work stations ST1, ST2, ST3 being each assigned a predetermined work process to be performed by the automatic work machine. This makes it possible to implement a design so as to assign work to each work station, so that the production line 1 can be easily constructed, and a wide variety of products can be produced by a single production line 1.

Further, according to the present embodiment, in particular, the third assembly cell 21 includes the push-up mechanism 111 for each of the work stations ST1, ST2, ST3, the push-up mechanism 111 being configured to push up the pallet 59 from the transfer surface of the first transfer conveyor 21Ca by a predetermined amount. This allows only the pallet 59 located at any one of the work stations ST1, ST2, ST3 to be separately transferred. For example, when a work station located on the downstream side is vacant (having no pallet 59), the pallet 59 at each work station can be separately moved so as to fill the vacancy. Accordingly, it is possible to prevent the work stations ST1, ST2, ST3 from becoming vacant and to reduce the tact time.

Further, according to the present embodiment, in particular, the third assembly cell 21 includes the positioning mechanism 94 disposed at the first work station ST1 located on the most upstream side in the transfer direction and configured to position the pallet 59 at a predetermined position, and the servomotor 92 configured to drive the first transfer conveyor 21Ca. This eliminates the need for highly-accurate positioning of the cells (the third assembly cell 21 and the connection cell 19 adjacent to the upstream side of the third assembly cell 21), so that the cells can be easily replaced, and the flexibility of the production line 1 can be further increased. Further, after positioning at the first work station ST1, the position and speed of the pallet 59 can be accurately controlled by the servomotor 92, so that the accuracy of the position control between the work stations can be increased, and the travel speed of the pallet 59 can be increased to reduce the travel time. Furthermore, it is not necessary to install a position sensor at each work station, so that the cost can be reduced.

Further, according to the present embodiment, in particular, the third assembly cell 21 includes, as the automatic work machine, the substrate mounting machine 97, the screwing machine 105, and the cover fitting machine 109 that are specifically designed to perform predetermined work, and the articulated robot 99 having a plurality of joints, the robot 99 being configured to move the component between the pallet 59 and the screwing machine 105 or the cover fitting machine 109, or between the screwing machine 105 and the cover fitting machine 109. As described above, the work on the component is performed by such a dedicated work machine, and the movement of the component is performed by the robot 99, so that replacing the dedicated work machine with the articulated robot 99 left makes it possible to change to an assembly cell that performs different work, and the flexibility of the assembly cell can be increased. Further, it is possible to focus on the development of the dedicated work machine, so that it is possible to flexibly respond to technological improvements, technological innovations, and the like.

Further, according to the present embodiment, in particular, the production line 1 include the component supply cells 5, 17, 25, and the component supply cells 5, 17, 25 include the reception openings 39, 63, 77 through which the component container 37 containing the component is received from the automatic guided vehicle 43 and the ejection openings 40, 64, 78 through which the component container 37 that is empty is ejected to the automatic guided vehicle 43, and the reception openings 39, 63, 77 are each disposed adjacent to the upstream side of a corresponding one of the ejection openings 40, 64, 78 in the travel direction 42 of the automatic guided vehicle 43.

This allows the automatic guided vehicle 43 to move to the ejection opening after transferring the component container 37 containing the component to supply the component container 37 to the reception opening of the component supply cell, and receive the component container 37 that is empty from the ejection opening of the component supply cell. As described above, the automatic guided vehicle 43 can supply and eject the component container 37 without changing the travel direction, so that it is possible to reduce the travel distance of the automatic guided vehicle 43 and to efficiently supply and receive the component container 37.

Further, the method of manufacturing the production line 1 according to the present embodiment includes disposing the work cells 5, 9, 13, 17, 21, 25, 29 equipped with the automatic work machine configured to perform predetermined work on the component based on a specification of the production line, and disposing, as needed, the connection cells 3, 7, 11, 15, 19, 23, 27, 31 adjacent to the work cell, the connection cells 3, 7, 11, 15, 19, 23, 27, 31 being capable of repairing or ejecting the component.

Accordingly, for example, when the reliability and certainty of the work in the work cell are high, a structure having no connection cell may be employed; on the other hand, for example, when the reliability and certainty of the work in a specific work cell are low, when priority is given to an increase in yield in the production line 1 or to continuation of production, or the like, a structure where the connection cells are each disposed adjacent to a corresponding one of the work cells may be employed. Accordingly, the layout of the production line 1 can be optimized, so that high flexibility (adjustability, adaptability, versatility) can be realized.

Further, according to the present embodiment, in particular, the method of manufacturing the production line 1 further includes, based on the reliability of the predetermined work performed by the automatic work machine in the work cells 5, 9, 13, 17, 21, 25, 29, removing the connection cells 3, 7, 11, 15, 19, 23, 27, 31 each disposed adjacent to a corresponding one of the work cells 5, 9, 13, 17, 21, 25, 29. Accordingly, for example, when the reliability and certainty of the work in the work cell are increased due to the introduction of a new automatic work machine, technological improvements, technological innovations, etc., removing the connection cell adjacent to the work cell makes it possible to optimize the layout of production line 1.

Further, the production line 1 according to the present embodiment includes a combination of the plurality of cells 3, 5, 7, 9, 11, 13, 15, 17, 19, 21, 23, 25, 27, 29, 31, the plurality of cells 3, 5, 7, 9, 11, 13, 15, 17, 19, 21, 23, 25, 27, 29, 31 include the transfer conveyors 3C, 5C, 7A, 9C, 11A, 13C, 15C, 15D, 17C, 19A, 21C, 23A, 25C, 27A, 29C, 31A, respectively, configured to transfer the pallets 33, 59, 73 on which at least one of the components W1, W2, W3, W4, W5, W6 is placed, and at least cells 5, 9, 13, 15, 17, 21, 23, 25, 29, 31 of the plurality of cells include the automatic work machines configured to perform predetermined work on the components W1, W2, W3, W4, W5, W6.

Accordingly, it is possible to cause the automatic work machine to perform major work such as the supply of the component and assembly of the component while transferring the component in each cell making up the production line 1, so that it is possible to promote automation. Further, since the production line 1 includes a combination of a plurality of cells, changing the number, arrangement, type, combination, etc. of the cells makes it possible to respond to the type and quantity of products to be produced, fluctuations in the work process, etc., and it is thus possible to implement a highly flexible production line. Furthermore, since the cells 7, 11, 15, 19, 23, 27, etc. that can be manually operated by the worker are placed between the cells 5, 9, 13, 17, 21, 25, 29 each equipped with the automatic work machine, it is possible to check whether the work has been performed properly by the automatic work machine, to manually perform the work when, for example, the work has not been performed properly or the work cannot be performed due to a failure occurring in the automatic work machine, to manually support work that is difficult for the automatic work machine to perform, and the like.

### <6. Modification>

Note that the embodiment of the disclosure is not limited to the above-described embodiment, and various modifications may be made without departing from the gist and technical idea of the disclosure.

### (5-1. Case where a plurality of identical dedicated work machines are installed in assembly cell)

For example, when the work process that requires a time longer than the tact time (determined based on the specification of the production line) set for the assembly cell is performed in the assembly cell, a plurality of dedicated work machines configured to perform the work may be installed, and this work process may be assigned to the plurality of work stations.

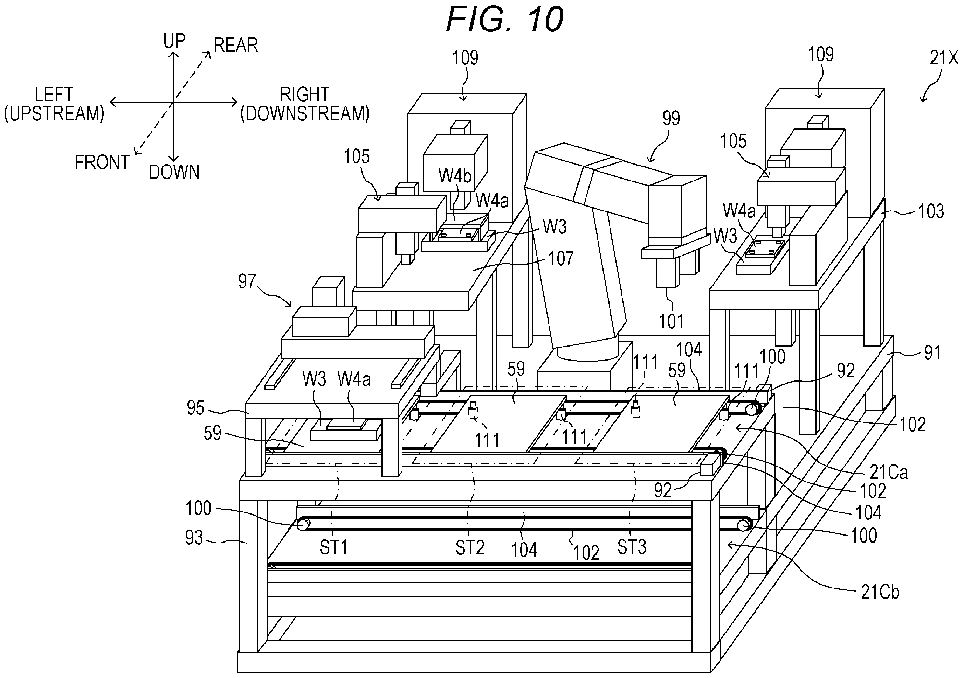

For example, in the example shown in FIG. 10, in a third assembly cell 21X, the screwing machine 105 and the cover fitting machine 109 are installed on both the platform 103 and the platform 107, and the screwing work process and the cover fitting work process can be performed simultaneously in two systems. The present modification is an example where, for example, a time required for the screwing work process and the cover fitting work process (for example, 60 seconds) is longer than a tact time (for example, 45 seconds) set for the third assembly cell 21X. Further, the same work processes, that is, both the screwing work process and the cover fitting work process in this example, are assigned to the second work station ST2 and the third work station ST3.

The above-described structure causes the third assembly cell 21X to operate as follows. That is, a workpiece (the first semi-finished product W3 on which the interface substrate W4a is mounted) placed on the second pallet 59 that has stopped at the second work station ST2 is alternately moved to one screwing machine 105 (for example, the platform 103) and the other screwing machine 105 (for example, the platform 107) by the robot 99. In each of the platforms 103, 107, the screwing machine 105 performs the screwing work, and the cover fitting machine 109 performs the cover fitting work. The second pallet 59 from which the workpiece has been taken out at the second work station ST2 is moved to the third work station ST3, and the workpiece is alternately placed on the second pallet 59 by the robot 99 from one cover fitting machine 109 (for example, the platform 103) and the other cover fitting machine 109 (for example, the platform 107). Accordingly, the work process that requires a time longer than the tact time of the third assembly cell 21X can be performed simultaneously in two systems. As a result, the above-described work process can be performed without extending the tact time of the third assembly cell 21X.

Note that, as described above, two or more work stations to which the same work process is assigned need not necessarily be provided in the same cell. For example, when it is not possible to install two screwing machines 105 and two cover fitting machines 109 in the third assembly cell 21X due to space restriction, or the like, one of the screwing machines 105 and one of the cover fitting machines 109 may be installed in a cell different from the third assembly cell 21X (for example, another assembly cell). In this case, for example, the second work station ST2 to which the work performed by one of the screwing machines 105 and one of the cover fitting machines 109 is assigned may be provided in the third assembly cell 21X, and the third work station ST3 to which the work performed by the other screwing machine 105 and the other cover fitting machine 109 is assigned may be provided in another assembly cell.

### (5-2. Case where pallet is not circulated)

According to the above-described embodiment, the structure where the pallet is circulated in the production line 1 is employed, but the pallet need not necessarily be circulated. For example, a structure may be employed where the pallet is supplied by either the automatic work machine or the worker to the connection cell located on the most upstream side of the production line (the connection cell 3 according to the above-described embodiment), the pallet is collected by either the automatic work machine or the worker from the connection cell located on the most downstream side of the production line (the connection cell 31 according to the above-described embodiment), and the pallet is transferred from the exit of the production line to the entrance of the production line by, for example, the trolley, the automatic guided vehicle, or the like. In this case, when it is necessary to change the type of pallet in the course as in the production line 1, a connection cell in which the pallet is replaced by either the automatic work machine or the worker may be disposed at that place (the connection cells 15, 23 according to the above-described embodiment).

### <7. Example of hardware structure of controller>

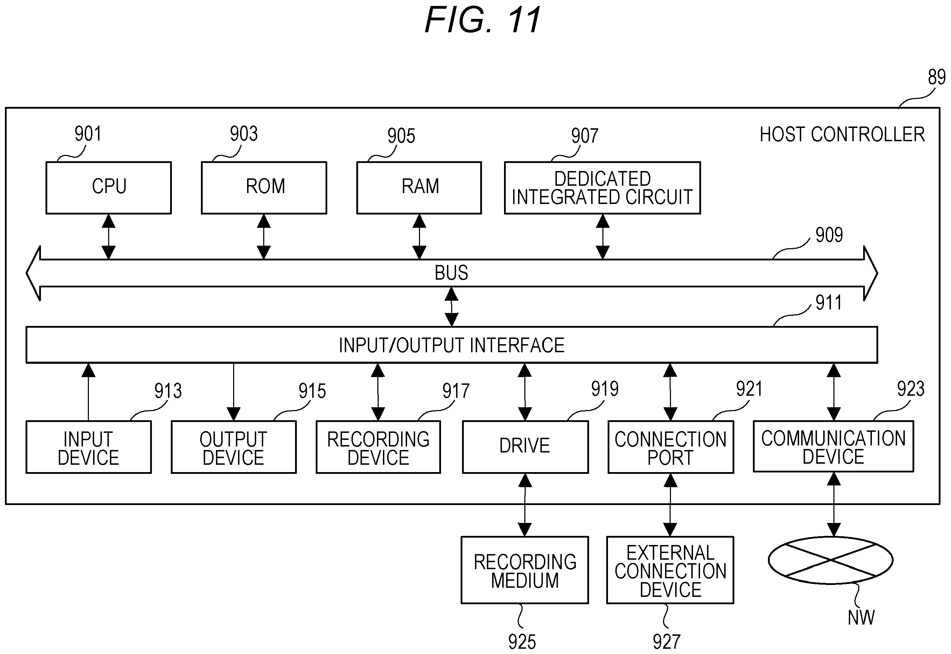

Next, a description will be given of an example of a hardware structure of the host controller 89 described above with reference to FIG. 11. Note that the same hardware structure may be applied to the controllers 35, 47, 49, 53, 55, 57, 61, 67, 69, 71, 75, 81, 83, 85, 87 each included in a corresponding cell. Note that, in FIG. 11, the component responsible for the function of supplying drive power to the servomotor and the like is not shown as needed.

As shown in FIG. 11, the host controller 89 includes, for example, a CPU 901, a ROM 903, a RAM 905, a dedicated integrated circuit 907 such as an ASIC or FPGA constructed for a specific application, an input device 913, an output device 915, a recording device 917, a drive 919, a connection port 921, and a communication device 923. These components are interconnected so as to transmit a signal to each other via a bus 909 or an input/output interface 911.

A program can be recorded into, for example, the ROM 903, the RAM 905, the recording device 917, or the like.

The program is transitorily or non-transitorily (permanently) recorded into, for example, a magnetic disk such as a flexible disk, an optical disc such as a CD, an MO disk, or a DVD, or a removable recording medium 925 such as a semiconductor memory. Such a recording medium 925 can also be provided as so-called package software. In this case, the program recorded into such recording media 925 may be read by the drive 919 and recorded into the recording device 917 via the input/output interface 911, the bus 909, or the like.

Further, the program can also be recorded into, for example, a download site, another computer, another recording device, or the like (not shown). In this case, the program is transferred over a network NW such as LAN or the Internet, and the communication device 923 receives this program. Then, the program received by the communication device 923 may be recorded into the recording device 917 via the input/output interface 911, the bus 909, or the like.

The program can also be recorded into a desired external connection device 927, for example. In this case, the program may be transferred via an appropriate connection port 921 and recorded into the recording device 917 via the input/output interface 911, the bus 909, or the like.

Then, the CPU 901 performs various processes in accordance with the program recorded into the recording device 917 to implement the operations of the production line 1 described above. At this time, for example, the CPU 901 may directly read the program from the recording device 917 and then execute the program, or may load the program into the RAM 905 and then execute the program. Further, for example, when the CPU 901 receives the program via the communication device 923, the drive 919, or the connection port 921, the CPU 901 may directly execute the program thus received without recording the program into the recording device 917.

Further, the CPU 901 may perform, as needed, various processes based on signals or information input from the input device 913 such as a mouse, a keyboard, or a microphone (not shown).

Then, the CPU 901 may cause the output device 915 such as a display device or an audio output device to output a result of performing the above-described processes, and the CPU 901 may transmit, as needed, the process result via the communication device 923 or the connection port 921 to record the process result into the recording device 917 or the recording medium 925.

In addition to the above, the methods according to the above-described embodiment and each modification may be suitably combined and used. In addition, although not illustrated one by one, the above-described embodiment and each modification are implemented with various changes without departing from the gist of the embodiment and modification.

### Reference Signs List

1 production line
3 connection cell (second cell)
3C transfer conveyor (third transfer device)
3S access space (access part)
5 first component supply cell (first cell, third cell)
5Ca first transfer conveyor (first transfer device)
5Cb second transfer conveyor (second transfer device)
7 connection cell (second cell)
7Aa first transfer conveyor (transfer device)
7Ab second transfer conveyor (transfer device)
7S access space (access part)
9 first assembly cell (first cell)
9Ca first transfer conveyor (first transfer device)
9Cb second transfer conveyor (second transfer device)
11 connection cell (second cell)
11Aa first transfer conveyor (transfer device)
11Ab second transfer conveyor (transfer device)
11S access space (access part)
13 second assembly cell (first cell)
13Ca first transfer conveyor (first transfer device)
13Cb second transfer conveyor (second transfer device)
15 connection cell (second cell)
15Ca first transfer conveyor (first transfer device)
15Cb second transfer conveyor (second transfer device)
15D transfer conveyor (third transfer device)
15S access space (access part)
17 second component supply cell (first cell, third cell)
17Ca first transfer conveyor (first transfer device)
17Cb second transfer conveyor (second transfer device)
19 connection cell (second cell)
19Aa first transfer conveyor (transfer device)
19Ab second transfer conveyor (transfer device)
19S access space (access part)
21 third assembly cell (first cell)
21Ca first transfer conveyor (first transfer device)
21Cb second transfer conveyor (second transfer device)
21X third assembly cell (first cell)
23 connection cell (second cell)
23A transfer conveyor (third transfer device)
23S access space (access part)
25 third component supply cell (first cell, third cell)
25Ca first transfer conveyor (first transfer device)
25Cb second transfer conveyor (second transfer device)
27 connection cell (second cell)
27Aa first transfer conveyor (transfer device)
27Ab second transfer conveyor (transfer device)
27S access space (access part)
29 fourth assembly cell (first cell)
29Ca first transfer conveyor (first transfer device)
29Cb second transfer conveyor (second transfer device)
31 connection cell (second cell)
31A transfer conveyor (third transfer device)
31S access space (access part)
32 lift mechanism (moving mechanism)
33 palette
37 component container
39 reception opening
40 ejection opening
43 automated guided vehicle
46 lift mechanism (moving mechanism)
48 lift mechanism (moving mechanism)
50 lift mechanism (moving mechanism)
59 palette
63 reception opening
64 ejection opening
73 palette
77 reception opening
78 ejection opening
92 servomotor
94 positioning mechanism
97 substrate mounting machine (automatic work machine, dedicated work machine)
99 robot (automatic work machine)
105 screwing machine (automatic work machine, dedicated work machine)
109 cover fitting machine (automatic work machine, dedicated work machine)
111 push-up mechanism
127 robot (automatic work machine)
ST1 first work station
ST2 second work station
ST3 third work station
W1 component
W2 component
W3 semi-finished product
W4 component
W5 semi-finished product
W6 component
W7 product

## Claims

1. A production line for producing products, comprising:
a combination of a plurality of cells, the plurality of cells comprising:
at least one first cell equipped with an automatic work machine configured to perform predetermined work on a component; and
at least one second cell disposed adjacent to the first cell and capable of repairing or ejecting the component.

2. The production line according to claim 1, wherein
the second cell includes an access part configured to allow a worker to repair or eject the component.

3. The production line according to claim 1 or 2, wherein
the first cell comprises:
a first transfer device configured to transfer a pallet on which the component is placed in a first direction that is a transfer direction of the component in the production line; and
a second transfer device configured to transfer the pallet from which the component has been taken out in a second direction opposite to the first direction.

4. The production line according to claim 3, wherein
at least one of the second cells comprises:
a third transfer device capable of transferring the pallet in both the first direction and the second direction; and
a moving mechanism configured to move the third transfer device between a position corresponding to the first transfer device of the first cell and a position corresponding to the second transfer device of the first cell.

5. The production line according to claim 3 or 4, wherein
the first cell includes a plurality of work stations serving as stop positions where the pallet transferred by the first transfer device is stopped for a predetermined stop time, the plurality of work stations being each assigned a predetermined work process to be performed by the automatic work machine.

6. The production line according to claim 5, wherein
when a time required for the work process assigned to each of the work stations is longer than a tact time set for the first cell, the same work process is assigned to at least two of the work stations.

7. The production line according to claim 5 or 6, wherein
the first cell includes a push-up mechanism for each of the work stations, the push-up mechanism being configured to push up the pallet from a transfer surface of the first transfer device by a predetermined amount.

8. The production line according to any one of claims 5 to 7, wherein
the first cell comprises:
a positioning mechanism disposed at the work station located on the most upstream side in the first direction, the positioning mechanism being configured to position the pallet at a predetermined position; and
a servomotor configured to drive the first transfer device.

9. The production line according to any one of claims 3 to 8,
wherein the first cell, as the automatic work machine, comprises,
at least one dedicated work machine specifically designed to perform the predetermined work; and
at least one articulated robot having a plurality of joints and configured to move the component between the pallet and the dedicated work machine, or between the dedicated work machines.

10. The production line according to any one of claims 1 to 9, wherein
the first cell includes a third cell configured to supply the component to the production line,
the third cell comprises:
a reception opening through which a component container containing the component is received from an automatic guided vehicle; and
an ejection opening through which the component container that is empty is ejected to the automatic guided vehicle, the reception opening being disposed adjacent to an upstream side of the ejection opening in a travel direction of the automatic guided vehicle.

11. A production line for producing products, comprising:
a combination of a plurality of cells, the plurality of cells comprising:
at least one first cell equipped with an automatic work machine configured to perform predetermined work on a component; and
at least one second cell disposed adjacent to the first cell and capable of repairing or ejecting the component,
the first cell comprising:
a first transfer device configured to transfer a pallet on which the component is placed; and
a plurality of work stations serving as stop positions where the pallet transferred by the first transfer device is stopped for a predetermined stop time, the plurality of work stations being each assigned a predetermined work process to be performed by the automatic work machine,
the first cell, as the automatic work machine, further comprising:
at least one dedicated work machine specifically designed to perform the predetermined work; and
at least one articulated robot having a plurality of joints and configured to move the component between the pallet and the dedicated work machine, or between a plurality of the dedicated work machines.

12. A method of manufacturing a production line for producing products, the production line including a combination of a plurality of cells, the method comprising:
disposing at least one first cell equipped with an automatic work machine configured to perform predetermined work on a component based on a specification of the production line; and
disposing, as needed, at least one second cell adjacent to the first cell, the at least one second cell being capable of repairing or ejecting the component.

13. The method of manufacturing a production line according to claim 12, further comprising removing the second cell disposed adjacent to the first cell based on reliability of the predetermined work to be performed by the automatic work machine in the first cell.

14. A production line for producing products, comprising:
a combination of a plurality of cells, wherein
each of the plurality of cells comprises a transfer device configured to transfer a pallet on which a component is placed, and
at least one of the plurality of cells includes an automatic work machine configured to perform predetermined work on the component.
